# EUROPÄISCHE PATENTSCHRIFT

(11) **EP 3 391 516 B1**
(45) Veröffentlichungstag und Bekanntmachung des Hinweises auf die Patenterteilung: **28.04.2021**
(21) Anmeldenummer: 16826295.4
(22) Anmeldetag: 14.12.2016
(51) Int. Cl.: H02K 15/085, H02K 15/09, H02K 15/06

(54) **VERFAHREN UND VORRICHTUNG FÜR DEN EINBAU EINES DRAHTPAKETES IN EINE ELEKTRISCHE MASCHINE**
METHOD AND DEVICE FOR INSTALLING A WIRE PACKAGE IN AN ELECTRICAL MACHINE
PROCÉDÉ ET DISPOSITIF D'ENCASTREMENT D'UN PAQUET DE FILS DANS UNE MACHINE ÉLECTRIQUE

(30) Priorität: 15.12.2015 DE 102015121894; 08.03.2016 DE 102016104228; 18.04.2016 DE 102016107171; 22.06.2016 DE 102016111478
(43) Veröffentlichungstag der Anmeldung: 24.10.2018
(73) Patentinhaber: Grob-Werke GmbH & Co. KG, 87719 Mindelheim (DE)
(72) Erfinder: DREIER, Günter, 86489 Deisenhausen (DE); RAUSCHER, Ralf, 87748 Fellheim (DE); SEIDEL, Korbinian, 87719 Mindelheim BR (DE); FENDT, Simon, 87757 Kirchheim (DE)
(74) Vertreter: KASTEL Patentanwälte PartG mbB
(86) Internationale Anmeldenummer: PCT/EP2016/081082
(87) Internationale Veröffentlichungsnummer: WO 2017/102892

(56) Entgegenhaltungen:
- EP-A1- 0 528 115
- EP-A2- 2 009 768
- EP-A2- 2 009 768
- DE-T5-112012 003 437
- DE-T5-112012 003 437
- DE-T5-112012 003 703
- DE-T5-112012 003 703
- JP-A- 2008 206 334
- JP-A- 2008 206 334
- US-A1- 2008 201 935
- US-A1- 2008 258 570
- US-A1- 2008 258 570

## Beschreibung

Die Erfindung betrifft einen Paketträger zum Einbringen eines Drahtpakets in ein Bauteil in Form eines Stators oder eines Rotors eines Elektromotors. Weiter betrifft die Erfindung eine Kombination eines solchen Paketträgers mit einer Einpressvorrichtung zum Einpressen eines Drahtpakets in eine Mehrzahl von Aufnahmen des Paketträgers. Weiter betrifft die Erfindung ein Verfahren für den Einbau einer Mehrzahl von Drahtwicklungen in ein Bauteil in Form eines Stators oder eines Rotors eines Elektromotors, wobei das Bauteil eine Vielzahl von längsverlaufenden Nuten aufweist, die zur Aufnahme von Drahtabschnitten der Drahtwicklungen vorgesehen sind. Schließlich betrifft die Erfindung eine Vorrichtung für den Einbau einer Mehrzahl von Drahtwicklungen in einem Bauteil in Form eines Stators oder Rotors eines Elektromotors.

Eine elektrische Maschine, zum Beispiel ein Elektromotor, besteht aus einem in der Regel stillstehenden Stator und einem hierzu drehbar gelagerten Rotor. Solche elektrischen Maschinen dienen dazu, mechanische Energie in elektrische Energie oder umgekehrt umzusetzen. Diese Konzepte sind hinlänglich bekannt. Mitentscheidend für einen guten Wirkungsgrad solcher Anlagen ist die Ausgestaltung und die Anordnung der Drahtwicklungen in dem als Stator oder Rotor ausgebildeten Bauteil der elektrischen Maschine, zum Beispiel dem Stator oder Rotor eines Elektromotors, wobei zum Beispiel Verfahren bekannt sind, bei welchen der Draht jeweils einzeln parallel zu der Längserstreckung der Nut eingeführt wird.

Aus der US 2008/0258570 A1, der DE 11 2012 003 437 T5, der DE 11 2012 003 703 T5, der EP 2 009 768 A2, der JP 2008 206 334 A, der US 2008/0201935 A1 und der EP 0 528 115 A1 sind Verfahren und Vorrichtungen zur Herstellung eines Stators einer elektrische Maschine bekannt, mit denen Spulenwicklungen mittels eines Fügewerkzeuges in Nuten eines ringförmigen Statorgehäuses eingefügt werden können. Z.B. wird bei einer Ausführungsform der US 2008/0201935 A1 ein Drahtpaket auf einem linearen Träger vorbereitet und dann auf einen Paketträger überführt, der äußere Aufnahmenuten zur Aufnahme von geradlinigen Drahtabschnitten des Drahtpakets hat. Der Paketträger wird in das ringförmige Statorgehäuse axial eingeführt. In den Böden der Aufnahmenuten befinden sich Schlitze, in denen im eingefahrenen Zustand Schieber aufgenommen sind, die in die Aufnahmenuten des Paketträgers einfahren können, um so das Drahtpaket aus den Aufnahmenuten auszustoßen und in die Nuten des Statorgehäuses auszuschieben.

Der Erfindung liegt die Aufgabe zugrunde, einen Paketträger bereitzustellen, mit dem das Einbringen eines Drahtpakets in einen Stator oder Rotor eines Elektromotors prozesstechnisch verbessert möglich ist.

Diese Aufgabe wird durch einen Paketträger gemäß Anspruch 1 gelöst. Vorteilhafte Ausgestaltungen des Paketträgers sowie Kombinationen, Verfahren und Vorrichtungen zum Einbringen des Drahtpakets, die einen derartigen Paketträger verwenden, sind Gegenstand der weiteren Ansprüche.

Die Erfindung schafft gemäß einem Aspekt davon einen Paketträger zum Einbringen eines Drahtpakets in ein Bauteil in Form eines Stators oder Rotors eines Elektromotors. Der Paketträger weist einen Einpressdorn auf, welcher sich entlang einer Achse erstreckt. Der Paketträger weist eine Anzahl von Lamellen auf, welche radial verstellbar sind, wobei sie zumindest in einem ausgefahrenen Zustand radial aus dem Einpressdorn vorstehen und zwischen jeweils zwei umfangsmäßig benachbarten Lamellen eine jeweilige Aufnahme für einen Teil des Drahtpakets ausbilden. Der Paketträger weist eine Betätigungsvorrichtung auf, welche dazu ausgebildet ist, die Lamellen radial ein- und auszufahren. Der Paketträger weist außerdem eine Verschiebevorrichtung auf, welche dazu ausgebildet ist, die Lamellen entlang der Achse zu verschieben.

Ein solcher Paketträger hat sich als besondere vorteilhaft für das Einbringen eines Drahtpakets in ein Bauteil in Form eines Rotors oder Stators eines Elektromotors erwiesen. Insbesondere kann er für die Durchführung eines der im Folgenden noch näher beschriebenen Verfahren verwendet werden.

Der Einpressdorn hat bei einer vorteilhaften Ausgestaltung zumindest teilweise bzw. in einem konischen Abschnitt eine konische Form, welche sich entlang der Achse aufweitet. Dies kann vorteilhaft zum Einbringen des Drahtpakets in ein Bauteil verwendet werden.

Vorzugsweise ist der Einpressdorn radialsymmetrisch bezüglich der Achse ausgebildet. Dies erlaubt eine einfache Ausführung und entspricht der typischen Ausführung von hier relevanten Bauteilen.

Die Betätigungsvorrichtung kann insbesondere pneumatisch oder hydraulisch ausgeführt sein.

Die Betätigungsvorrichtung kann insbesondere einen Kolben mit Außen- und Innenkonus zum Ausschieben der Lamellen aufweisen. Eine solche Ausführung hat sich für typische Anwendungen bewährt.

Der Paketträger weist bevorzugt einen Verriegelungsmechanismus zum lösbaren und/oder temporären Verriegeln von Niederhaltern einer Einpressvorrichtung zum Einpressen eines Drahtpakets auf. Dies erlaubt ein vorteilhaftes Zusammenwirken mit den weiter oben bereits erwähnten Niederhaltern.

Der Paketträger ist bevorzugt zum Zusammenwirken mit einer Einpressvorrichtung wie nachfolgend noch näher beschrieben ausgebildet. Dabei kann auf alle beschriebenen Ausführungen und Varianten zurückgegriffen werden.

Weitere Aspekte der Erfindung betreffen eine Kombination des Paketträgers gemäß einer der zuvor erläuterten Ausgestaltungen mit einer derartigen Einpressvorrichtung, ein Verfahren unter Verwendung eines derartigen Paketträgers sowie eine Vorrichtung, die einen solchen Paketträger aufweist.

Eine Ausgestaltung des Verfahrens ist ein Verfahren für den Einbau eines, aus einer Mehrzahl von Drahtwicklungen bestehenden Drahtpaketes in ein Bauteil in Form eines Stators oder eines Rotors eines Elektromotors, wobei das Bauteil eine Vielzahl von längsverlaufenden Nuten aufweist, die zur Aufnahme von Drahtabschnitten der Drahtwicklungen vorgesehen sind, wobei das Drahtpaket von dem Paketträger gehalten wird, der Paketträger mit dem Drahtpaket am oder im Bauteil positioniert wird, und zumindest ein Teil des Paketträgers oder mindestens ein gegen den Paketträger angestelltes Element derart bewegt wird, das zumindest ein Teil des Drahtpaketes in einer, bezogen auf eine Bauteilachse radialen Bewegung in mindestens eine Nut des Bauteils bewegt wird.

Eine Ausgestaltung der Vorrichtung ist eine Vorrichtung für den Einbau eines, aus einer Mehrzahl von Drahtwicklungen bestehenden Drahtpaketes in ein Bauteil in Form eines Stators oder Rotors eines Elektromotors, wobei die Vorrichtung einen Paketträger gemäß einer der voranstehenden Ausgestaltungen aufweist, der dazu vorgesehen ist, das Drahtpaket aufzunehmen und ein Teil des Paketträgers oder mindestens ein gegen den Paketträger anstellbares Element eine Bewegung zumindest eines Teils des Drahtpakets bewirkt und die Vorrichtung insbesondere zur Durchführung eines der vor- bzw. nachbeschriebenen Verfahren vorgesehen ist. Wie bereits ausgeführt, ist der Stator in der Regel ein feststehendes Bauteil der elektrischen Maschine, der Rotor ist ein hierzu um eine Bauteilachse rotierendes Bauteil. Üblicherweise beschreibt die Rotationsachse des Rotors die Bauteilachse. Die Bauteilachse kann aber auch die Mittelachse des Stators sein. Dabei bewegt sich der Rotor relativ zum Stator. Üblicherweise befindet sich der Stator in elektrischen Maschinen außen, und nimmt den Rotor auf, allerdings ist dieses Konzept auch umkehrbar derart, dass der Stator innenstehend angeordnet ist und der Rotor den Stator umgreift. Der hier beschriebene Vorschlag ist auf den Einbau der Wicklungen in die Nuten eines Stators nicht beschränkt, der Vorschlag ist auch an im Einbauzustand rotierenden Bauteilen in Form von Rotoren realisierbar, die ebenfalls Nuten zur Aufnahme von Drahtabschnitten aufweisen können.

Bei dem erfindungsgemäßen Verfahren ist vorgesehen, dass der Paketträger mit dem Drahtpaket am oder im Bauteil positioniert wird. Je nach kinematischer Auslegung ist das Drahtpaket von außen nach innen, oder von innen nach außen zu montieren, demnach ist das Drahtpaket am (von außen nach innen) oder im Bauteil (von innen nach außen) zu positionieren.

Bei dem erfindungsgemäßen Verfahren ist weiter vorgesehen, dass zumindest ein Teil des Paketträgers oder mindestens ein gegen den Paketträger anstellbares Element bewegt wird. Dabei ist der Paketträger selber aus einer Mehrzahl von Teilen, bzw. Elementen aufgebaut und zumindest ein oder auch mehrere dieser Teile des Paketträgers sind geschickterweise bewegbar, um so die gewünschte radiale Bewegung des Drahtpaketes bzw. eines Teils des Drahtpaketes zu bewirken.

Ein wesentlicher Vorzug des hier beschriebenen Vorschlages liegt darin, dass die Drahtwicklungen in diesem Vorschlag nicht in die Nuten eingewickelt werden, sondern die Drahtwicklungen in einem vorgefertigten Drahtpaket zur Verfügung stehen, die in hierfür spezialisierten Anlagen vorgefertigt werden. Diese Vorfertigung erhöht die Effizienz der gesamten Produktion erheblich.

Ein weiterer Vorteil des hier beschriebenen Vorschlages liegt darin, dass das Drahtpaket in der einbaufertigen, endgültigen Anordnung auf dem Paketträger vorgehalten wird und dann in einer relativ einfachen Bewegung in die Nuten des Bauteiles eingeschoben wird. Geschickterweise ist die Anordnung so gewählt, dass die einzelnen Drahtwicklungen genau positioniert gehalten werden, um so die Einschiebbewegung, die mit hoher Passung erfolgt, optimiert durchführen zu können.

Dabei ist geschickterweise "nur" eine Radialbewegung bzw. eine Bewegung mit überwiegend radialen Bewegungsanteilen (jeweils bezogen auf die Bauteilachse) vorgesehen, d.h. erheblicher zusätzlicher mechanischer Stress auf das Drahtpaket ist nicht notwendig, daraus resultiert ein möglichst spannungs- und verwindungsfreier Einbau der Drahtabschnitte in die Nuten, was zu einer hohen Prozesssicherheit führt. Dabei ist zu beachten, dass die Realisierung einer radialen Bewegung konstruktiv relativ einfach realisierbar ist, was gerade bei einer Anordnung, bei der nicht sehr viel Platz zur Verfügung steht, von Vorteil ist.

Ein weiterer Vorteil des hier beschriebenen Vorschlages liegt darin, dass durch die Verarbeitung von vorkommissionierten Drahtpaketen die jeweiligen Drahtwicklungen aus Drähten mit größeren Querschnitten gefertigt werden können, die bei der im Stand der Technik bekannten Einwickel- oder Einzugtechnologie (Einlegbewegung des Drahtes parallel zur Nutlängserstreckung bzw. axial zur Bauteilachse), aufgrund der hohen Steifigkeit dieser Drähte nicht oder nur sehr kompliziert möglich war. Da aber mit der hier beschriebenen Technologie Drahtpakete mit deutlich größeren Einzelquerschnitten der Drähte zuverlässig verbaut werden können, können auch solch hergestellte elektrische Maschinen mit höheren Stromflüssen betrieben werden.

Der hier beschriebene Vorschlag vereint eine sichere Prozessführung bei der Herstellung der Bauteile von entsprechenden elektrischen Maschinen mit besseren Eigenschaften bei der Verwendung solcher elektrischer Maschinen.

Des Weiteren ist in dem Vorschlag vorteilhafter Weise vorgesehen, dass gleichzeitig in mehrere oder in alle Nuten der/die jeweiligen Drahtabschnitt/e das Drahtpaket bewegt wird. Die Anordnung ist dabei so vorgesehen, dass in eine Nut durchaus eine Mehrzahl von jeweils parallel angeordneten Drahtabschnitten eingebaut werden. Geschickterweise ist dabei vorgesehen, dass diese Mehrzahl von Drahtabschnitten pro Nut in einem radialen Bewegungsschritt eingesetzt werden. Hierdurch wird die Fertigung erheblich beschleunigt.

Bei einer bevorzugten Ausgestaltung des Vorschlags ist vorgesehen, dass der Paketträger mit dem Drahtpaket relativ zum Bauteil so positioniert wird, dass sich die jeweiligen Drahtabschnitte den jeweiligen, die Drahtabschnitte aufnehmenden Nuten gegenüber befinden, bevor die radiale Bewegung beginnt. Vorteilhafterweise ist dabei vorgesehen, dass die Bewegung des Paketträgers relativ zum Bauteil entkoppelt ist, also eine Relativbewegung des Paketträgers zum Bauteil möglich ist, um so die Ausrichtung der einzuschiebenden Drahtwicklungen/Drahtabschnitte zu den jeweiligen Nuten anpassen zu können.

Eine solche Prozessführung ist auch einfach zu realisieren, da die jeweiligen Bewegungen zueinander entkoppelt ablaufen. Zunächst wird der Paketträger relativ zum Bauteil positioniert, was zum Beispiel mit einer (bezogen auf die Bauteilachse) axialen Bewegung erfolgen kann. Dann erfolgt eine Ausrichtung des Paketträgers in Umfangsrichtung relativ zum Bauteil, was durch eine Drehbewegung des Paketträgers (oder des Bauteils) um die Bauteilachse erfolgt. Zum Beispiel trägt das Bauteil mindestens eine entsprechende Markierung, um eine Ausrichtung mechanisch oder optisch überwacht zu ermöglichen. Sind die beiden Elemente dann zueinander richtig ausgerichtet, erfolgt die radiale Einschiebbewegung. Da die einzelnen Bewegungen hintereinander ablaufen, resultiert eine einfache Kinematik.

Des Weiteren kann vorgesehen sein, dass, nachdem der Paketträger relativ zum Bauteil positioniert ist, das Element gegen den Paketträger angestellt wird und insbesondere das Element durch eine, relativ zur Bauteilachse radialen Bewegung die Drahtabschnitte von dem Paketträger ablöst und in die jeweilige Nut einschiebt. Bei dieser Realisierungsvariante wird ein zum Paketträger unabhängiges Element an diesen angestellt, was zum Beispiel durch eine (bezogen auf die Bauteilachse) radialen und oder axialen Bewegung erfolgen kann. Das Element sorgt dann, von der Steuerung überwacht, für die Einsetzbewegung, wobei üblicherweise die Drahtwicklungen des Drahtpaketes auf dem Paketträger in geeigneter Weise gehalten und diese daher von dem Paketträgern zunächst abzulösen sind.

In einer vorteilhaften Ausgestaltung ist vorgesehen, dass der Paketträger in einer Drehbewegung um die Bauteilachse gedreht wird und das Element eine Gleitkante aufweist, die im Zusammenwirken mit der Drehbewegung die Drahtabschnitte von dem Paketträger ablöst und in die jeweilige Nut einschiebt. In diesem Ausführungsbeispiel wird die radiale Einschubbewegung aus der sowieso für die Ausrichtung des Paketträgers relativ zum Bauteil vorgesehene Drehbewegung des Paketträgers abgeleitet. Dieser doppelte Nutzen verringert auch die Herstellkosten einer solchen Vorrichtung. Dieser Schritt folgt z.B. nach der radialen Anstellbewegung.

Geschickter Weise ist vorgesehen, dass bezogen auf die Bauteilachse auf beiden Seiten des Paketträgers je mindestens ein Element vorgesehen ist, das bei der Drehbewegung die Drahtabschnitte von dem Paketträger ablöst und in die jeweilige Nut einschiebt. Das Drahtpaket besteht aus Drahtabschnitten, die in die Nuten eingelegt werden und aus giebeldachförmigen Verbindungselementen dazwischen, die in der Transportstellung auf dem Paketträger an diesen oben und unten vorstehenden. Durch die Anordnung je eines Elementes an beiden Enden des Paketträgers (zum Beispiel oben und unten) wird der jeweilige Drahtabschnitt von zwei Seiten her bewegt und die Einschubbewegung erleichtert.

In einem ersten Vorschlag wird das angestellte Element dann radial bewegt (radiale Anstellbewegung) und so eine Einschiebbewegung auf das Drahtpaket bewirkt, die zumindest an einem Abschnitt die Drahtabschnitte in die Nut schiebt.

In einer weiteren bevorzugten Ausführungsform ist vorgesehen, dass der Paketträger das Drahtpaket in einer kegelstumpfartigen Anordnung, relativ zum Bauteil positioniert, dann sich der Paketträger derart bewegt, dass das Drahtpaket in eine zylinderförmige Anordnung übergeht und gleichzeitig die einzelnen Drahtabschnitte von dem Paketträger abgelöst und in die jeweilige Nut eingeschoben werden. Die kegelstumpfartige Anordnung bezieht sich dabei auf die Außenkontur des Drahtpaketes. Diese kegelstumpfartige, oder auch konische Anordnung erleichtert erheblich das Einführen des Paketträgers in den Innenraum des Bauteiles (Stators). Ist der Paketträger positioniert und ausgerichtet, erfolgt eine Bewegung zumindest eines Teils des Paketträgers, der das kegelstumpfartige Drahtpaket in eine Zylinderform ausrichtet und gleichzeitig die Drahtabschnitte in die Nuten schiebt.

Des Weiteren ist günstiger Weise vorgesehen, dass der Durchmesser der Basis der kegelstumpfartigen Anordnung größer ist als der Innendurchmesser des Bauteiles, wodurch die einzelnen Drahtabschnitte bereits während der Positionierbewegung des Paketträgers relativ zum Bauteil von den jeweiligen Nuten geführt werden. Durch eine solche Verfahrensweise wird der Einbau erheblich erleichtert, da bereits bei dem Einführen des Paketträgers in das Innere des Bauteiles die Drahtabschnitte von den jeweiligen Nuten gefangen werden und dann nur noch eine Hochklappbewegung notwendig ist, um die Drahtabschnitte vollständig in die Nuten einzuführen.

Wie bereits ausgeführt, umfasst die Erfindung auch eine Vorrichtung für den Einbau eines, aus einer Mehrzahl von Drahtwicklungen bestehenden Drahtpaketes in ein Bauteil in Form eines Stators oder Rotors eines Elektromotors, wie oben beschrieben.

Vorteilhafter Weise ist vorgesehen, dass die Vorrichtung eine Bauteilaufnahme aufweist und die Bauteilaufnahme und der Paketträger zueinander bewegbar, insbesondere zueinander verdrehbar sind. Vorteilhafterweise besitzt sowohl die Bauteilaufnahme wie auch der Paketträger je einen Drehantrieb, die von einer gemeinsamen Maschinensteuerung überwacht wird. Dadurch sind zum einem relative Ausrichtbewegungen zueinander wie auch synchrone Drehbewegungen möglich.

Des Weiteren ist in dem Vorschlag vorteilhafter Weise vorgesehen, dass der Paketträger zylinder-, kegelstumpf- oder ringartig gebildet ist und innen oder außen eine Vielzahl von den Halteelementen für verschiedene Drahtabschnitte der Drahtwicklungen aufweist. Die Ausgestaltung des Paketträgers ist sehr variabel, vorteilhafterweise wird eine rotationssymmetrische Ausgestaltung bevorzugt, ohne aber hierauf die Erfindung beschränken zu wollen. Der Paketträger besitzt dabei geschickterweise zumindest für all die Drahtabschnitte, die in eine gemeinsame Nut einzubauen sind, je ein (dann zum Beispiel auch mehrfach genutztes) Halteelement. Bevorzugterweise sind die Halteelemente zum Beispiel als Halteschlitze oder als Halteklammern ausgebildet und halten die Drahtabschnitte in Position zu den jeweiligen Nuten am Paketträger vor.

Bei einer bevorzugten Ausgestaltung des Vorschlags ist vorgesehen, dass, bezogen auf die Bauteilachse, auf beiden Seiten des Paketträgers ein Element gegen den Paketträger anstellbar und relativ zu diesem bewegbar ist. Durch die Anordnung je eines Elementes an beiden Enden des Paketträgers (zum Beispiel oben und unten) wird der jeweilige Drahtabschnitt von zwei Seiten her bewegt und die Einschubbewegung erleichtert.

Des Weiteren kann eine gemeinsame, insbesondere synchrone Drehbewegung von Paketträger und Bauteilaufnahme vorgesehen sein. Bei der hier vorgeschlagenen synchronen Drehbewegung bleibt die eingangs eingerichtete relative Lage der Drahtabschnitte auf dem Paketträger unverändert zu der Lage der Nuten auf dem Bauteil. Zu dieser Drehbewegung bleibt das/die Element/e unverändert und es gelingt so, durch diese gemeinsame Drehbewegung, die Drahtabschnitte an dem Gleitkanten des Elementes von dem Paketträger abzulösen und gleichzeitig in der Radialbewegung in die Nuten zu schieben.

In einer vorteilhaften Ausgestaltung ist vorgesehen, dass der Paketträger einen Grundkörper aufweist, an dessen Umfang eine Mehrzahl von Haltestegen angeordnet sind, die Haltestege dafür vorgesehen sind, die Drahtabschnitte zu halten und die einzelnen Haltestege je an Gelenkpunkten gelenkig am Grundkörper gehalten sind. Bevorzugt ist vorgesehen, den Grundkörper rotationssymmetrisch auszulegen, ohne aber den Vorschlag hierauf beschränken zu wollen. Aufgabe des Grundkörpers ist es insbesondere, eine Anzahl von Haltestegen zu tragen, die die beweglichen Teile des Paketträgers darstellen.

Geschickter Weise ist vorgesehen, dass jedem Haltesteg ein Anlenkhebel zugeordnet ist, der einerseits gelenkig mit dem Haltesteg und andererseits gelenkig mit dem Grundkörper verbunden ist. Geschickterweise ist unter Umständen auch eine Langlochführung zwischen Grundkörper und Anlenkhebel, zwischen Anlenkhebel und Haltesteg oder zwischen Haltesteg und Grundkörper vorgesehen.

In einer weiteren bevorzugten Ausführungsform ist vorgesehen, dass der Paketträger einen Schwenkantrieb aufweist, der auf die gelenkig gehaltenen Haltestege wirkt und diese um die Gelenkpunkte zu verschwenken vermag. In dieser ersten Variante für die Ausgestaltung einer radialen Relativbewegung ist der Schwenkantrieb in oder auf dem Paketträger angeordnet und wirkt in geeigneter Weise zumindest auf die Haltestege, gegebenenfalls auch über die Anlenkhebel. Es ist klar, dass die hieraus resultierende Verschwenkbewegung als radiale Bewegung im Sinne der Erfindung anzusehen ist.

Des Weiteren ist günstiger Weise vorgesehen, dass das Element gegen den Paketträger anstellbar ist und bei der Anstellbewegung mit den Anlenkhebeln oder den Haltestegen zusammenwirkt und so die Haltestege um die Gelenkpunkte zu verschwenken vermag. Dieser Vorschlag beschreibt eine zweite Variante für die Initiierung der radialen Bewegung. Dabei besitzt das Element z.B. eine konische Ausgestaltung, die in geeigneter Weise auf die Anlenkhebel oder die Haltestege wirkt und bei der Anstellbewegung diese radial nach außen schiebt. Hierdurch wird die anfänglich kegelstumpfartige Anordnung des Drahtpaketes auf dem Paketträger in eine zylinderförmige Anordnung übergehen und gleichzeitig werden die jeweiligen Drahtabschnitte in die Nuten eingeschoben.

Gemäß einer weiteren möglichen Ausführung betrifft die Erfindung ein Verfahren für den Einbau eines, aus einer Mehrzahl von Drahtwicklungen bestehenden Drahtpaketes in ein Bauteil in Form eines Stators oder eines Rotors einer elektrischen Maschine, wobei das Bauteil eine Vielzahl von längsverlaufenden Nuten aufweist, die zur Aufnahme von Drahtabschnitten der Drahtwicklungen vorgesehen sind, wobei das Drahtpaket von dem Paketträger gehalten wird, welcher zumindest einen konusförmigen Abschnitt aufweist, der Paketträger mit dem Drahtpaket am oder im Bauteil positioniert wird, und der Paketträger unter Rückhaltung des Drahtpakets relativ zum Bauteil derart bewegt wird, dass der konusförmige Abschnitt durch das Drahtpaket durchgeht und dadurch zumindest ein Teil des Drahtpaketes in einer, bezogen auf eine Bauteilachse radialen Bewegung in mindestens eine Nut des Bauteils bewegt wird.

Gemäß einer möglichen Ausführung ist vorgesehen, dass der Paketträger einen ersten zylinderförmigen Abschnitt aufweist, welcher an den konusförmigen Abschnitt angrenzt und einen Radius aufweist, welcher dem kleinsten Radius des konusförmigen Abschnitts entspricht, wobei das Drahtpaket anfangs auf dem ersten zylinderförmigen Abschnitt angeordnet ist.

Gemäß einer möglichen Ausführung ist vorgesehen, dass der Paketträger einen zweiten zylinderförmigen Abschnitt aufweist, welcher an den konusförmigen Abschnitt angrenzt und einen Radius aufweist, welcher dem größten Radius des konusförmigen Abschnitts entspricht, wobei das Drahtpaket nach dem Bewegen in die mindestens eine Nut auf dem zweiten zylinderförmigen Abschnitt angeordnet ist.

Gemäß einer möglichen Ausführung ist vorgesehen, dass der Paketträger einen Deckschiebertransportabschnitt aufweist, an welchem eine Anzahl von Deckschiebern außenseitig angeordnet sind, wobei durch weitere Bewegung des Paketträgers nach dem Bewegen des Drahtpakets in die mindestens eine Nut der Deckschiebertransportabschnitt jeweilige Deckschieber in jeweilige Nuten einbringt.

Gemäß einer möglichen Ausführung ist vorgesehen, dass die Deckschieber nach dem Einbringen die jeweiligen Nuten verschließen.

Gemäß einer möglichen Ausführung ist vorgesehen, dass die Deckschieber mittels eines separaten Werkzeugs eingebracht werden.

Gemäß einer möglichen Ausführung ist vorgesehen, dass der Paketträger einen lamellenförmigen Wicklungsmitnehmer aufweist, welcher die Drahtwicklungen des Drahtpakets aufnimmt.

Gemäß einer möglichen Ausführung ist vorgesehen, dass gleichzeitig in mehrere oder in alle Nuten der/die jeweiligen Drahtabschnitt/e das Drahtpaket bewegt wird und/oder der Paketträger mit dem Drahtpaket relativ zum Bauteil so positioniert wird, dass sich die jeweiligen Drahtabschnitte den jeweiligen, die Drahtabschnitte aufnehmenden Nuten gegenüber befinden, bevor die radiale Bewegung beginnt.

Gemäß einer weiteren möglichen Ausführung betrifft die Erfindung eine Vorrichtung für den Einbau eines, aus einer Mehrzahl von Drahtwicklungen bestehenden Drahtpaketes in ein Bauteil in Form eines Stators oder Rotors eines Elektromotors, wobei die Vorrichtung den Paketträger aufweist, der dazu vorgesehen ist, das Drahtpaket aufzunehmen und einen konusförmigen Abschnitt zum Aufweiten des Drahtpakets bei Durchgang durch das Drahtpaket aufweist, und die Vorrichtung insbesondere zur Durchführung des hier beschriebene, insbesondere des eben beschriebenen Verfahrens ausgebildet ist.

Gemäß einer möglichen Ausführung ist vorgesehen, dass der Paketträger einen ersten zylinderförmigen Abschnitt aufweist, welcher an den konusförmigen Abschnitt angrenzt und einen Radius aufweist, welcher dem kleinsten Radius des konusförmigen Abschnitts entspricht, wobei der erste zylinderförmige Abschnitt zum Halten des Drahtpakets vor dem Einbau ausgebildet ist.

Gemäß einer möglichen Ausführung ist vorgesehen, dass der Paketträger einen zweiten zylinderförmigen Abschnitt aufweist, welcher an den konusförmigen Abschnitt angrenzt und einen Radius aufweist, welcher dem größten Radius des konusförmigen Abschnitts entspricht, wobei der zweite zylinderförmige Abschnitt das Drahtpaket zum Halten des Drahtpakets nach dem Bewegen in die mindestens eine Nut ausgebildet ist.

Gemäß einer möglichen Ausführung ist vorgesehen, dass dem Paketträger ein Rückhaltewerkzeug für das Drahtpaket zugeordnet ist.

Gemäß einer möglichen Ausführung ist vorgesehen, dass der Paketträger einen Deckschiebertransportabschnitt aufweist, welcher zur außenseitigen Aufnahme einer Anzahl von Deckschiebern ausgebildet ist, und welcher an den konusförmigen Abschnitt oder an den zweiten zylinderförmigen Abschnitt angrenzt, um nach dem Einbau der Drahtwicklungen die Deckschieber in die Nuten einzubringen, wobei dem Deckschiebertransportabschnitt vorzugsweise ein Deckschiebereinbringwerkzeug zugeordnetist.

Gemäß einer möglichen Ausführung ist vorgesehen, dass der Paketträger einen lamellenförmigen Wicklungsmitnehmer zum Aufnehmen der Drahtwicklungen des Drahtpakets aufweist.

Des Weiteren ist bei Ausgestaltungen der Erfindung eine Einpressvorrichtung zum Einpressen eines Drahtpakets in eine Mehrzahl von Aufnahmen eines Paketträgers vorgesehen. Die Einpressvorrichtung weist einen Rahmen auf, welcher um den Paketträger herum positionierbar ist. Die Einpressvorrichtung weist eine Anzahl von Einpresselementen auf, wobei jedes Einpresselement entlang eines jeweiligen Umlaufwegs bewegbar ist, und wobei jedes Einpresselement radial verschiebbar am Rahmen befestigt ist. Außerdem weist die Einpressvorrichtung eine Anzahl von Eindrückelementen auf, wobei jedem Einpresselement ein Eindrückelement zugeordnet ist, welches dazu ausgebildet ist, das jeweilige Einpresselement radial in Richtung auf den Paketträger zu bewegen, so dass das Einpresselement das Drahtpaket weiter in die jeweilige Aufnahme einpresst.

Alternativ ist Einpressvorrichtung zum Einpressen eines Drahtpakets in eine Mehrzahl von Aufnahmen eines Paketträgers vorgesehen, wobei die Einpressvorrichtung folgendesaufweist:
- einen Rahmen, welcher um den Paketträger herum positionierbar ist,
- eine Anzahl von Eindrückelementen, die jeweils eine Mehrzahl von Einpresselementen tragen und derart ausgebildet ist, um die jeweiligen Einpresselement radial in Richtung auf den Paketträger zu bewegen, so dass das Einpresselement zumindest einen Teil des Drahtpaketes in die jeweilige Aufnahme einpresst.

Mittels der hier beschriebenen Einpressvorrichtung kann ein Drahtpaket, welches auf einem Paketträger aufgebracht ist, in besonders vorteilhafter Weise eingepresst und damit insbesondere komprimiert werden. Dies erleichtert das nachfolgende Einbringen in ein Bauteil wie einen Stator oder Rotor eines Elektromagneten. Außerdem kann durch das Komprimieren eine maximale Anzahl von Drahtwicklungen in einem bestimmten Raum vorgesehenwerden.

Die beiden vorbeschriebenen hier beschriebenen alternativen Einpressvorrichtung unterscheiden sich in der konstruktiven Ausgestaltung ein wenig.

Bei der ersten beschriebenen Variante ist jedem Einpresselement ein Eindrückelement, bzw jedem Eindrückelement ein Einpresselement zugeordnet. Somit ist vorgesehen, dass ein Einpresselement die jeweiligen Drahtabschnitte des Drahtpaketes für eine Mehrzahl von Nuten in diese einschiebt.

Bei der zweiten Variante trägt das Eindrückelement eine Mehrzahl von Einpresselementen, die beispielhaft auch als Schieber zu bezeichnen sind und jeweils nur den Drahtabschnitt der Drahtwicklung für eine Nut in diese einschieben.

Natürlich ist es möglich, zwischen diesen beiden Varianten auch Zwischenformen vorzusehen.

Der Rahmen kann vorteilhaft ringförmig ausgebildet sein.

Der Rahmen ist vorzugsweise relativ zum Paketträger derart positionierbar ist, dass der Paketträger zentrisch und/oder koaxial zum Rahmen angeordnet ist.

Die Einpresselemente sind gemäß einer Ausführung als jeweilige umlaufende Riemen ausgeführt.

Jeder Riemen kann dabei insbesondere um eine Mehrzahl von vorzugsweise drei Zahnrädern umlaufen.

Bevorzugt definieren dabei jeweils zwei radial innenliegende Zahnräder eine Anlagefläche des Einpresselements an den Paketträger und/oder das Drahtpaket.

Vorzugsweise sind die radial innenliegenden Zahnräder entlang jeweiliger Verschiebewege bezüglich einer Mittenachse radial verschiebbar ausgebildet, wobei der Paketträger koaxial mit der Mittenachse positionierbar ist.

Die Einpresselemente sind bevorzugt durch jeweilige Antriebe antreibbar, insbesondere rotatorisch antreibbar. Damit können sie beispielsweise mit einer Drehbewegung des Rahmens relativ zum Paketträger synchronisiert werden, wie dies weiter unten näher beschrieben werden wird.

Die radial innenliegenden Zahnräder sind bevorzugt zu jeweiligen Zweierpaaren zusammengeordnet, wobei die jeweiligen Zahnräder jedes Zweierpaars über ein gemeinsames Eindrückelement synchron verschiebbar sind. Dies ermöglicht eine leichte Bedienung und ein gleichmäßiges Einpressen entlang eines Umfangs eines Paketträgers.

Die als Riemen ausgeführten Einpresselemente sind bevorzugt umlaufend antreibbar.

Die radial innenliegenden Zahnräder sind bevorzugt durch jeweilige Anlenkhebel der Eindrückelemente entlang der Verschiebewege bewegbar, insbesondere paarweise.

Gemäß einer bevorzugten Ausführung ist der Rahmen dazu ausgebildet, während des Einpressens relativ zum Paketträger zu rotieren. Dies erlaubt ein besonders wirkungsvolles Einpressen.

Die Einpressvorrichtung kann insbesondere einen Rahmenantrieb zum Versetzen des Rahmens in eine Rotationsbewegung relativ zum Paketträger aufweisen.

Der Rahmenantrieb ist dabei bevorzugt mit jeweiligen Einpresselementen synchronisiert, so dass jeweilige Riemen am Paketträger umfangsmäßig stationär bleiben.

Die Verschiebewege werden geschickter Weise durch jeweilige am Rahmen ausgebildete Führungsschienen vorgegeben.

Gemäß einer bevorzugten Ausführung weist die Einpressvorrichtung eine Anzahl weiterer Einpresselemente auf, welche bezüglich einer Spiegelebene spiegelverkehrt zu den Einpresselementen angeordnet sind, und welche entsprechend der Einpresselemente funktionell gestaltet sind. Dies kann insbesondere bedeuten, dass auch Komponenten, welche mit den Einpresselementen verbunden sind, entsprechend beidseitig der Spiegelebene vorhanden sind und insbesondere auch spiegelverkehrt bzw. spiegelsymmetrisch einander ausgebildet sein können. Beispielsweise kann es sich dabei um die Eindrückelemente handeln.

Gemäß einer vorteilhaften Ausführung weist die Einpressvorrichtung ferner einen ersten Satz von Niederhaltern auf, welche neben den Einpresselementen angeordnet sind und welche dazu ausgebildet sind, das Drahtpaket an dem Paketträger niederzuhalten, insbesondere während des Einpressens. Damit kann die Komprimierung des Drahtpakets unterstützt und/oder aufrecht erhalten werden.

Die Einpressvorrichtung weist geschickter Weise ferner einen ersten Satz von Komprimierwerkzeugen auf, an welchen die Niederhalter des ersten Satzes anbringbar sind und mittels welchen die Niederhalter in Richtung auf das Drahtpaket drückbar sind. Dies erlaubt eine einfache Betätigung bzw. Bedienung der Niederhalter.

Die Einpressvorrichtung weist bevorzugt ferner einen zweiten Satz von Niederhaltern auf, welche neben den Einpresselementen oder den weiteren Einpresselementen angeordnet sind und welche dazu ausgebildet sind, das Drahtpaket an dem Paketträger niederzuhalten, insbesondere während des Einpressens.

Die Einpressvorrichtung weist bevorzugt ferner einen zweiten Satz von Komprimierwerkzeugen auf, an welchen die Niederhalter des zweiten Satzes anbringbar sind und mittels welchen die Niederhalter in Richtung auf das Drahtpaket drückbar sind.

Bevorzugt sind die Niederhalter zumindest des ersten und/oder des zweiten Satzes dazu ausgebildet, temporär am Paketträger verriegelt zu werden.

Eine bevorzugte Ausgestaltung des Verfahrens sieht ein Verfahren zum Einpressen eines Drahtpakets in eine Mehrzahl von Aufnahmen eines Paketträgers vor, wobei das Verfahren folgende Schritte aufweist:
- Bereitstellen des Paketträgers, wobei das Drahtpaket in den Aufnahmen aufgenommen ist,
- Einbringen des Paketträgers in eine Einpressvorrichtung zum Einpressen des Drahtpakets,
- Verschieben von Einpresselementen der Einpressvorrichtung in Richtung auf den Paketträger, so dass die Einpresselemente das Drahtpaket einpressen.

Dieses Verfahren kann bevorzugt verwendet werden, um ein Drahtpaket in den Paketträger einzupressen, was die weiter oben bereits erwähnten Vorteile mit sich bringt.

Die Einpressvorrichtung ist dabei bevorzugt eine Einpressvorrichtung wie weiter oben beschrieben. Dabei kann auf alle beschriebenen Ausführungen und Varianten zurückgegriffen werden.

Der Paketträger ist dabei ein Paketträger wie weiter oben beschrieben. Dabei kann auf alle beschriebenen Ausführungen und Varianten zurückgegriffen werden.

Paketträger und Einpressvorrichtung werden bevorzugt während des Verfahrens relativ zueinander rotiert. Es wurde erkannt, dass damit eine besonders gute Einpresswirkung erreicht werden kann.

Das Drahtpaket wird bevorzugt auf den Einpressdorn gewickelt, so dass es in den Aufnahmen aufgenommen ist.

Vor dem Wickeln des Drahtpakets wird dabei bevorzugt eine Nutisolation in die Aufnahmen eingebracht, so dass diese zwischen Drahtpaket und Einpressdorn angeordnet ist, wenn das Drahtpaket in den Aufnahmen aufgenommen ist. Hierdurch wird in vorteilhafter Weise dafür gesorgt, dass eine gute Isolation zwischen Drahtpaket und Paketträger bzw. bei Einbringung der Nutisolation in das Bauteil auch zwischen Drahtpaket und Bauteil erreicht wird. Außerdem können Beschädigungen beim Einbringen vermieden werden, da die Nutisolation vorteilhaft auch Kanten, Unebenheiten und andere mögliche Quellen von Beschädigungen abdecken kann.

Die Nutisolation kann insbesondere ein Isolationspapier sein.

Die Nutisolation kann insbesondere nach dem Aufnehmen des Drahtpakets aufgeschnitten und/oder verklebt werden.

Der Einpressdorn kann vorzugsweise entlang der Achse einen ersten Bereich und einen zweiten Bereich aufweisen, wobei der erste Bereich einen kleineren Durchmesser aufweist als der zweite Bereich, wobei zwischen erstem Bereich und zweitem Bereich ein konischer Bereich angeordnet ist. Dies erlaubt ein Einpressen des Drahtpakets in ein Bauteil durch Verschieben des Paketträgers relativ zum Drahtpaket.

Das Drahtpaket wird bevorzugt am zweiten Bereich des Einpressdorns aufgewickelt.

Das Drahtpaket wird bevorzugt am ersten Bereich des Einpressdorns eingepresst.

Das Drahtpaket wird bevorzugt während des Einpressens von einer Anzahl von Niederhaltern der Einpressvorrichtung niedergehalten.

Das Drahtpaket kann auch während des Eipressens und/oder nach dem Einpressen axial beidseitig von einer Anzahl von Niederhaltern niedergehalten werden.

Nach dem Einpressen können insbesondere axial einseitig Niederhalter am Paketträger verriegelt und den Niederhaltern zugeordnete Komprimierwerkzeuge zurückgezogen werden, so dass das Drahtpaket einseitig axial zugänglich wird.

Nach dem einseitigen Verriegeln wird bevorzugt von der zugänglichen Seite aus das Bauteil radial außerhalb des Drahtpakets angeordnet, in welches das Drahtpaket einzubringen ist.

Der Paketträger kann insbesondere nach dem Anordnen des Bauteils unter Rückhaltung des Drahtpakets verschoben werden, so dass das Drahtpaket aufgrund Erhöhung des Durchmessers des Paketträgers in das Bauteil, insbesondere in Nuten des Bauteils, eingebracht wird.

Vor dem Einbringen des Drahtpakets in das Bauteil können verriegelte Niederhalter freigegeben werden.

Während des Einbringens des Drahtpakets in das Bauteil können Niederhalter am Drahtpaket verbleiben und insbesondere auch radial verschiebbar sein. Diese Niederhalter können das Drahtpaket insbesondere axial stabilisieren, so dass es aufgrund des sich erhöhenden Durchmessers in ein Bauteil eingebracht wird.

Nach dem Einbringen des Drahtpakets kann das Bauteil von dem Paketträger entfernt werden, insbesondere über den ersten Bereich.

Es sei verstanden, dass das hier beschriebenen Verfahren zumindest mittels einigen der hierin beschriebenen Schritte auf ein Verfahren erweitert werden kann, welches dem Einbringen eines Drahtpakets in ein Bauteil, insbesondere in einen Stator oder einen Rotor eines Elektromotors, dient.

In diesem Zusammenhang wird insbesondere darauf hingewiesen, dass alle in Bezug auf die Vorrichtung beschriebenen Merkmale und Eigenschaften aber auch Verfahrensweisen sinngemäß auch bezüglich der Formulierung des hier beschriebenen Verfahrens übertragbar und im Sinne der Erfindung einsetzbar und als mitoffenbart gelten. Gleiches gilt auch in umgekehrter Richtung, das bedeutet, nur in Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in einem Ausführungsbeispiel schematisch dargestellt. Es zeigen:
- Fig. 1a:: in einer dreidimensionalen Ansicht ein für den Einbau vorgesehenes Drahtpaket,
- Fig.: 1b: in einer dreidimensionalen Ansicht ein in den Stator eines Elektromotors eingebautes Drahtpaket,
- Fig. 2a:: in einer dreidimensionalen Ansicht der Einbau eines Drahtpaketes in ein Bauteil nach einem ersten Ausführungsbeispiel des hier beschriebenen Verfahrens,
- Fig. 2b:: in einer Seitenansicht eine erste Stellung in dem hier beschriebenen Verfahren nach Figur 2a,
- Fig. 2c:: in einer Seitenansicht eine erste Stellung in dem hier beschriebenen Verfahren nach Figur 2a,
- Fig. 3a, 3b, 3c, 3d, 3e und 3f:: je in einer Schnittdarstellung (Fig. 3a, 3c, 3e) bzw. je einer Draufsicht (Fig. 3b, 3d und 3f) verschiedene Stellungen (Position 1 Figur 3a und 3b, Position 2 Figur 3c und, Figur 3d und Position 3 Figur 3e und 3f) in einem zweiten Ausführungsbeispiel des hier beschriebenen Verfahrens,
- Fig. 4:: in einer perspektivischen Ansicht eine Vorrichtung zum Einbau eines Drahtpakets,
- Fig. 5 bis 7:: in Schnittansichten Zustände während eines Verfahrens zum Einbau eines Drahtpakets,
- Fig. 8:: eine Anordnung mit einer Vorrichtung zum Einpressen (Einpressvorrichtung) und mit einem Paketträger nach der Erfindung,
- Fig. 9:: den Paketträger separat,
- Fig. 10 bis 19:: Zustände in einem Verfahren zum Einpressen bzw. zur Herstellung eines Bauteils.
- Fig. 20a, 21a:: eine alternative Ausgestaltung der Einpressvorrichtung im geöffneten (Fig. 20a) bzw geschlossenen Zustand (Fig.21 a)
- Fig. 20b, 21b:: Detail zu den Fig. 20a, 21a

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

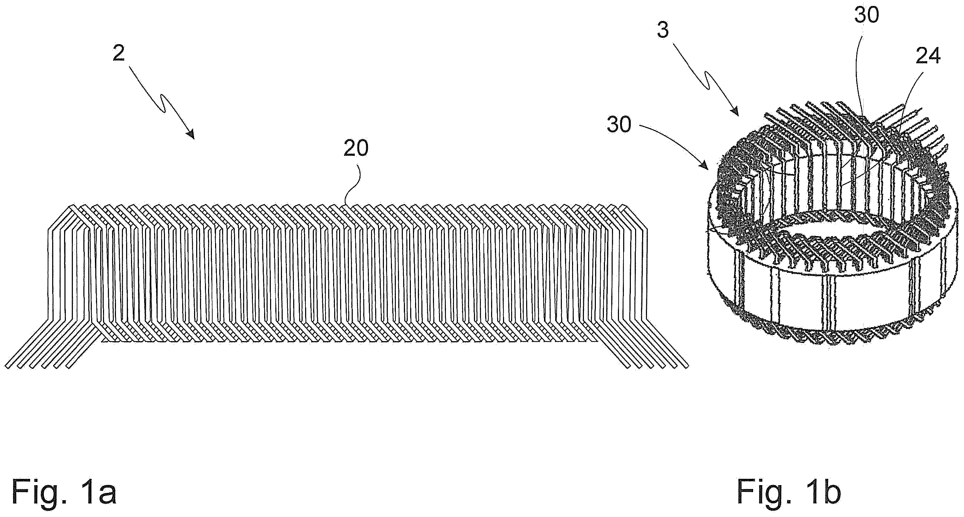

In Figur 1a ist das Drahtpaket 2 in einer Ansicht schematisch dargestellt. Das Drahtpaket 2 besteht aus einer Vielzahl von Drahtwicklungen 20, die aus gerade verlaufenden Drahtabschnitten 21 und giebelförmigen Verbindungsstücken 25 bestehen, die die einzelnen Drahtabschnitte 21 miteinander verbinden. Zu beachten ist, dass das Drahtpaket 2 aus jeweils sechs eigenständigen Leitungen 29 besteht, also insgesamt sechs Pole zur Verfügung stehen. Mit 28 sind die jeweiligen Leitungsenden gekennzeichnet, die auch elektrische Anschlussmöglichkeiten bieten.

In Figur 1b ist ein Bauteil 3 in Form eines Rotors oder Stators eines Elektromotors, hier ein Stator 30 gezeigt, in dem das Drahtpaket 2 nach Figur 1a bereits eingebaut ist. In diesem Einbauzustand des Drahtpaketes 2 beschreibt dieses eine zylinder- oder ringförmige Anordnung 24. Der Begriff zylinderförmige Anordnung bezieht sich dabei auf die Außenkontur des eingebauten Drahtpaketes 2, wobei die gerade verlaufenden Drahtabschnitte 21 in Nuten 31 des Stators 30 eingesetzt sind.

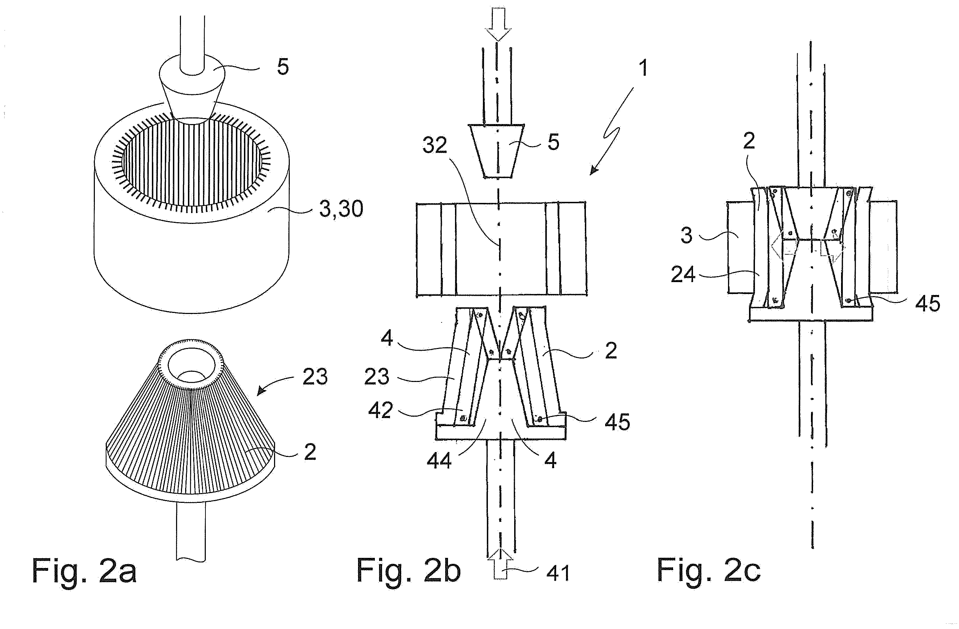

Figur 2b und Figur 2c zeigen in einer schematischen Ansicht ein erstes Ausführungsbeispiel des hier beschriebenen Verfahrens. Der (optional) um die Bauteilachse 32 drehbare Paketträger 4 trägt ein Drahtpaket 2, das hier in der Kontur kegelstumpfartig 23 angeordnet ist. In Figur 2a ist diese kegelstumpfartige Ausgestaltung 23 unten, auf dem Paketträger 4 gut zu sehen.

Der Paketträger 4 wird, bezogen auf die Bauteilachse 32, axial (siehe Pfeil 41) nach oben bewegt, um das kegelstumpfartige Drahtpaket 2,23 in das Innere 33 des Stators 3,30 einzuführen. Das gleiche kann natürlich auch durch eine Absenkbewegung des Stators 30 bzw. Bauteiles 3 nach unten bei stillstehendem Paketträger 4 erreicht werden.

Der Paketträger 4 besteht aus einem Grundkörper 44, der einen rotationssymmetrischen Grundaufbau und zentral einen Dorn 49 aufweist. Nahe an der Bauteilachse 32 befindet sich auf dem oberen Ende des Dornes 49 eine Anzahl von Anlenkhebeln 46, die hier gelenkig (siehe Gelenkachsen 48) an dem Grundkörper 44 angeschlossen sind.

Das kegelstumpfartige Drahtpaket 2,23 wird in dieser Lage gestützt von einer Reihe von Haltestegen 42, die einerseits über jeweilige Gelenkpunkte 45 gelenkig am Grundkörper 44 gehalten sind und an ihrem oberen, dem Gelenkpunkte 45 abgewandten Ende über eine Gelenkführung 47 mit den jeweiligen Anlenkhebeln 46 gelenkig verbunden sind.

Nun wird zunächst das Drahtpaket 2 innerhalb des Bauteiles 3 bzw. Stators 30 positioniert derart, dass die jeweiligen Drahtabschnitte 21 den jeweiligen Nuten 31 gegenüber liegen. Diese Führungsaufgabe wird dadurch erleichtert, dass die Basis des kegelstumpfartigen Drahtpaketes 2, 23 etwas breiter ist, wie der Innendurchmesser des Stators 30. Das bedeutet, dass die axialen Enden oder der axiale Rand (bezogen auf die Bauteilachse) des Drahtpaketes 2 bei ganz in das Innere 33 des Stators 3 eingefahrenem Paketträger 4 von den Nutwänden der jeweiligen Nut geführt bzw. gefangen werden und so bereits eine Ausrichtung erfahren.

Im nächsten Schritt erfolgt die Zustellbewegung des Elementes 5 in einer Anstellbewegung 51, die bevorzugt parallel zur Bauteilachse erfolgt. Das Element 5 ist hier als Konus (wobei dieser unten bzw. dem Bauteil 3 zugewandt den kleineren Durchmesser aufweist) ausgeführt und wirkt, wenn das Element 5 ganz in das Innere 33 des Stators 30 eingefahren ist, mit dem Anlenkhebel 46 zusammen und spreizt diesen. Diese Spreizbewegung erfolgt, bezogen auf die Bauteilachse 32, radial.

Dies ist in Figur 2c gezeigt, wobei auch anschaulich wird, wie die kegelstumpfartige Anordnung 23 des Drahtpaketes 2 zu einer zylinder- oder ringförmigen Anordnung 24 aufgestellt wird. Gleichzeitig ist das Drahtpaket 2 über die gesamte Höhe der Nuten 31 in diese hineingeglitten.

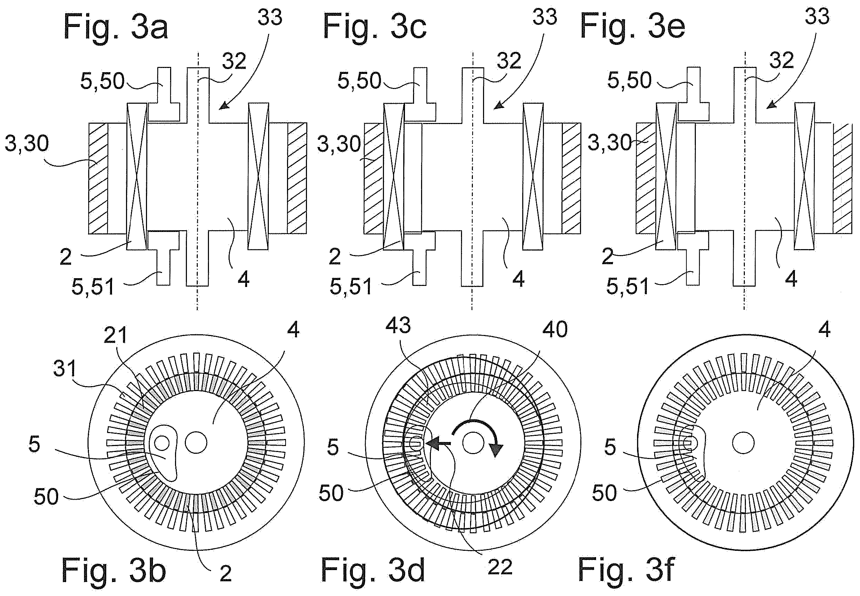

Die Figurensequenz nach Fig. 3a, 3b, 3c, 3d, 3e und 3f zeigt in verschiedenen Positionen verschiedene Zustände des Fertigungsprozesses nach einer zweiten Variante des hier beschriebenen Verfahrens.

Dem hier in Position 1 (Figur 3a und 3b) gezeigten Ausgangszustand gehen noch folgende Schritte voraus. Der Paketträger 4 ist dem hier gezeigten Ausführungsbeispiel zylinderförmig ausgestaltet und trägt an seiner Mantelfläche das Drahtpaket 2, das seinerseits ebenfalls ringförmig bzw. in Ansicht zylinderförmig ist. Der Paketträger 4 ist bereits in das Bauteilinnere 33 eingetaucht, die jeweiligen Drahtabschnitte 21 liegen den jeweiligen Nuten 31 gegenüber, dies sieht man insbesondere sehr gut in der Draufsicht nach Figur 3b. Von oben und von unten sind bereits je ein Element 5 gegen den Paketträger 4 herangeführt, die je mit einer Gleitkante 50 ausgestattet sind und nachdem sie angestellt sind, zunächst in einer radialen Bewegung 22 (siehe Figur 3d) nach außen, in Richtung des Bauteiles 3 bewegtwerden.

Die Figuren 3c und Figur 3d beschreiben die Position 2, den Einpressvorgang. Bei dieser radialen Bewegung 22 erfolgt bereits ein partielles Einschieben der Drahtabschnitte 21 in die Nuten 31. Zuvor werden hierzu die auf dem Paketträger 4 gehaltenen Drahtabschnitte aus dem Halteelement 43, diese sind zum Beispiel schlitzartig ausgebildet, herausgeschoben. Geschickterweise ist der jeweilige Drahtabschnitt 21 immer entsprechend geführt, entweder einerseits durch die Halteelemente 43 oder durch die Nuten 31. Die Einschubbewegung der Drahtabschnitte 21 erfolgt hierbei durch die Gleitkante 50, die bezogen auf die Bauteilachse 32 spiralförmig ausgebildet ist und dessen Radius sich in Uhrzeigerrichtung vergrößert.

Nachdem der erste Teil des Drahtpaketes 2 in den jeweiligen Nuten 31 eingeschoben ist, erfolgt eine gemeinsame Drehbewegung 40 von Bauteil 3 und Drahtpaket 2 (bzw. dem Paketträger 4) um die (gemeinsame) Bauteilachse 32. Dabei bleibt das Element 5 ortsfest. Die Drehbewegung 40 ist dabei ebenfalls in Uhrzeigerrichtung, wodurch kontinuierlich die auf dem Paketträger 4 noch gehaltenen Drahtabschnitte 21 an das Element 5 herangeführt werden und dann über die Gleitkante 50 bewegt, in die jeweiligen synchron mit dem Paketträger 4 sich mitbewegenden Nuten 31 des Bauteiles 3 bzw. Stator 30 eingeschoben werden.

Nach einer 360° Drehung der Anordnung Paketträger 4 und Bauteil 3 um die Bauteilachse 32 ist dann das gesamte Drahtpaket 2 von dem Paketträger 4 abgelöst und in das Bauteil 3 eingebaut bzw. in die Nuten 30 eingeschoben. Damit ist der Einbau abgeschlossen.

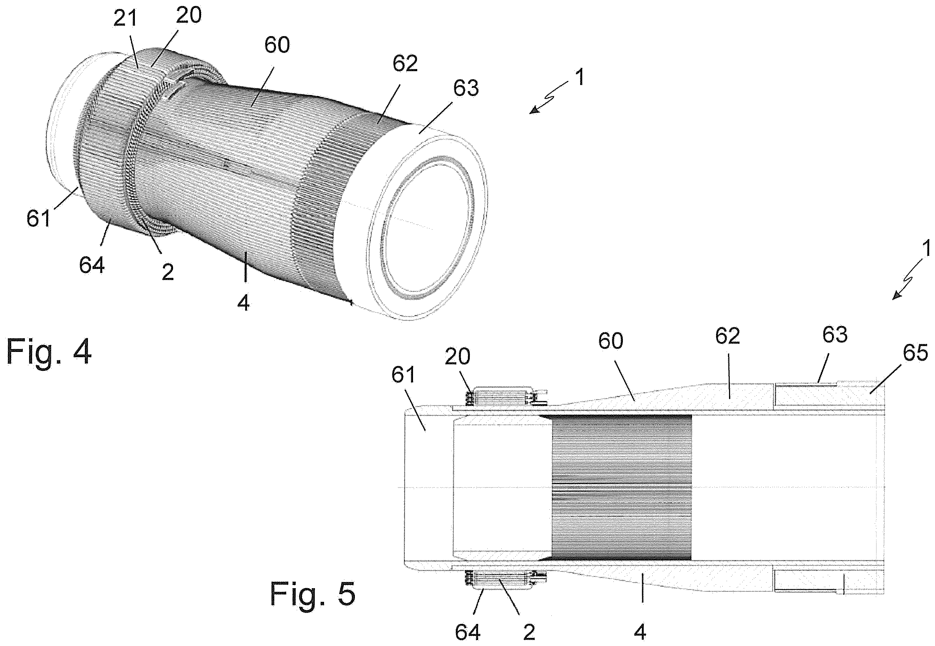

Figur 4 zeigt eine alternative Vorrichtung 1, welche zur Durchführung einer alternativen Ausführung des hier beschriebenen Verfahrens verwendet werden kann.

Die Vorrichtung 1 weist einen Paketträger 4 auf. Der Paketträger 4 weist einen konusförmigen Abschnitt 60 auf, welcher mittig im Paketträger 4 entlang einer Längserstreckung angeordnet ist und in welchem sich ein Radius das Paketträgers 4 kontinuierlich aufweitet.

Links an den konusförmigen Abschnitt 60 grenzt ein erster zylinderförmiger Abschnitt 61 an, welcher einen konstanten Radius aufweist. Der Radius des ersten zylinderförmigen Abschnitts 61 ist dabei gerade so groß wie der kleinste Radius des konusförmigen Abschnitts 60.

Rechts an den konusförmigen Abschnitt 60 grenzt ein zweiter zylinderförmiger Abschnitt 62 an, welcher einen konstanten Radius aufweist. Der Radius des zweiten zylinderförmigen Abschnitts 62 ist dabei gerade so groß wie der größte Radius des konusförmigen Abschnitts 60.

An den zweiten zylinderförmigen Abschnitt 62 grenzt wiederum rechts ein Deckschiebertransportabschnitt 63 an. Dieser weist vorliegend ebenfalls den gleichen Radius auf wie der zweite zylinderförmige Abschnitt 62. Er bildet somit einen unmittelbaren Fortsatz des zweiten zylinderförmigen Abschnitts 62.

In dem in Figur 4 dargestellten Zustand ist linksseitig am Paketträger 4, umgebend um den ersten zylinderförmigen Abschnitt 61, ein Wicklungsmitnehmer 64 angeordnet. Der Wicklungsmitnehmer 64 ist dazu ausgebildet, ein Drahtpaket 2 aufzunehmen, welches in ein Bauteil wie beispielsweise einen Stator oder einen Rotor einer elektrischen Maschine eingebracht werden soll.

Das Drahtpaket 2 ist in Figur 4 ebenfalls dargestellt. Es weist eine Mehrzahl von Drahtwicklungen 20 mit jeweiligen Drahtabschnitten 21 auf. Dabei handelt es sich um eine typische Wicklung für einen Elektromotor, insbesondere einen leistungsfähigen Elektromotor, wie er beispielsweise in einem Elektrofahrzeug oder einem Hybridfahrzeug verwendet wird.

In der Figur 5 ist der gleiche Zustand wie in Figur 4 dargestellt, jedoch handelt es sich bei Figur 5 nicht um eine perspektivische Ansicht, sondern um eine seitliche Schnittansicht. Bezüglich der gezeigten Komponenten sei weitgehend auf die Beschreibung zu Figur 4 verwiesen.

Weiterhin ist in Figur 5 zu sehen, dass in dem Deckschiebertransportabschnitt 63 eine Anzahl von Deckschiebern 65 angebracht ist, wobei diese Deckschieber 65 radial außenseitig angeordnet sind. Diese Deckschieber 65 sind dazu vorgesehen, nach dem Eindringen des Drahtpakets 2 in jeweilige Nuten die Nuten zu verschließen bzw. abzudecken. Das Verschließen bzw. Abdecken erfolgt dabei insbesondere zu einem radial innenliegenden Innenraum des Bauteils bzw. Stators.

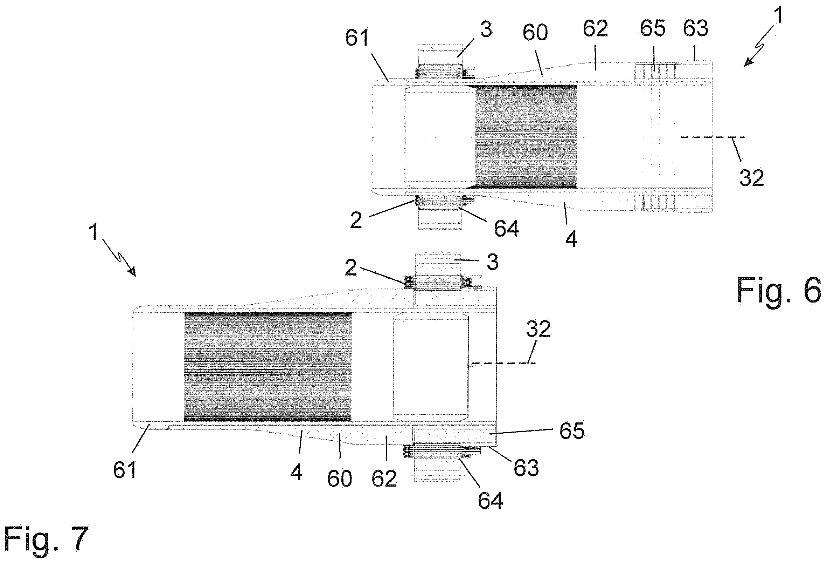

Es wird nunmehr mit Bezug auf die Figuren 6 und 7 gezeigt und beschrieben werden, wie das Einbringen des Drahtpakets 2 in das Bauteil 3 funktioniert. Bei dem Bauteil 3 handelt es sich dabei vorliegend um einen Stator eines Elektromotors. Ein solcher Elektromotor kann insbesondere für Anwendungen vorgesehen sein, in welchen hohe Leistungen und lange Lebensdauern erforderlich sind, beispielsweise in elektrisch betriebenen Fahrzeugen.

In dem in Figur 6 dargestellten Zustand wurde das Drahtpaket 2 in das Bauteil 3 eingebracht, so dass sich das Drahtpaket 2 unmittelbar in dem Bauteil 3 befindet. Von diesem Zustand ausgehend kann nun der Paketträger 4 nach links verschoben werden. Das Drahtpaket 2 verbleibt dabei im Wicklungsmitnehmer 64 und wird in der gleichen axialen Position gehalten, so dass es sich relativ zum Bauteil 3 nicht axial verschiebt.

Die Bewegung des Paketträgers 4 erfolgt dabei parallel zu einer Bauteilachse 32 bzw. Symmetrieachse des Bauteils 3. Diese Bauteilachse 32 ist in Figur 6 eingezeichnet. Damit ist auch der Begriff einer axialen Bewegung definiert.

Wenn sich unter den gezeigten Bedingungen, also insbesondere unter Rückhaltung des Drahtpakets 2, der Paketträger 4 nach links bewegt, so führt dies dazu, dass das Drahtpaket 2 nicht mehr mit dem ersten zylinderförmigen Abschnitt 61 das Paketträgers 4 in Eingriff steht, sondern auf den konusförmigen Abschnitt 60 das Paketträgers 4 übergeht. Wie bereits weiter oben beschrieben wurde erhöht sich im konusförmigen Abschnitt 60 der Radius des Paketträgers 4, so dass durch die beschriebene Bewegung des Paketträgers 4 nach links der Radius des jeweiligen Teils des Paketträgers 4, an welchem das Drahtpaket 2 anliegt, ebenfalls erhöht wird. Dadurch wird das Drahtpaket 2 radialaufgeweitet.

Durch die eben beschriebene radiale Aufweitung des Drahtpakets 2 werden die Drahtwicklungen 20 bzw. Drahtabschnitte 21 des Drahtpakets 2 in jeweilige Nuten des Bauteils 3 gepresst. Es sei verstanden, dass hierzu typischerweise die Drahtwicklungen 20 bzw. Drahtabschnitte 21 des Drahtpakets 2 bereits vorher so angeordnet sind, dass sie jeweiligen Nuten des Bauteils 3 gegenüberliegen und ohne weitere Verschiebung entlang des Umfangs des Drahtpakets 2 in die Nuten eingeführt werden können.

Wenn sich der Paketträger 4 weiter nach links bewegt, so liegt das Drahtpaket 2 nicht mehr an dem konusförmigen Abschnitt 60, sondern schließlich an dem zweiten zylinderförmigen Abschnitt 62 an. Somit hat das Drahtpaket 2 seine größte radiale Ausdehnung erreicht. In diesem Zustand befindet es sich in den Nuten des Bauteils 3, wie dies in Figur 7 zu sehen ist.

Anschließend wird der Paketträger 4 noch weiter nach links verschoben, so dass das Drahtpaket 2 und das Bauteil 3 neben dem Deckschiebertransportabschnitt 63 angeordnet sind. Dies ist in Figur 7 dargestellt. Dabei können die Deckschieber 65 axial in die Nuten des Bauteils 3 eingeführt werden. Die Deckschieber 65 werden dabei insbesondere derart eingeführt, dass sie die Nuten zur Innenseite hin abschließen und verdecken. Damit werden die Drahtwicklungen 20 bzw. Drahtabschnitte 21 des Drahtpakets 2 insbesondere vor möglicher mechanischer Beschädigung, beispielsweise bei nachfolgenden Bearbeitungsschritten, geschützt.

Es sei verstanden, dass an dem konusförmigen Abschnitt 60 des Paketträgers 4 Nuten und/oder Führungsleisten in axialer Richtung angebracht sein können, wie dies in den Figuren angedeutet ist. Diese können beispielsweise das Drahtpaket 2 und/oder den Wicklungsmitnehmer 64 führen oder stabilisieren.

Die Ausführung, welche mit Bezug auf die Figuren 4 bis 7 dargestellt wurde, unterscheidet sich sowohl hinsichtlich der Verfahrensaspekte wie auch hinsichtlich der Vorrichtungsaspekte von den mit Bezug auf die Figuren 1 bis 3 dargestellten Ausführungen. Es wird jedoch ebenfalls das Ziel erreicht, ein Drahtpaket 2 zuverlässig und effizient in Nuten eines Bauteils 3 wie beispielsweise einen Stator eines Elektromotors zu verbringen und die Nuten gegebenenfalls mit Deckschiebern zuverschließen.

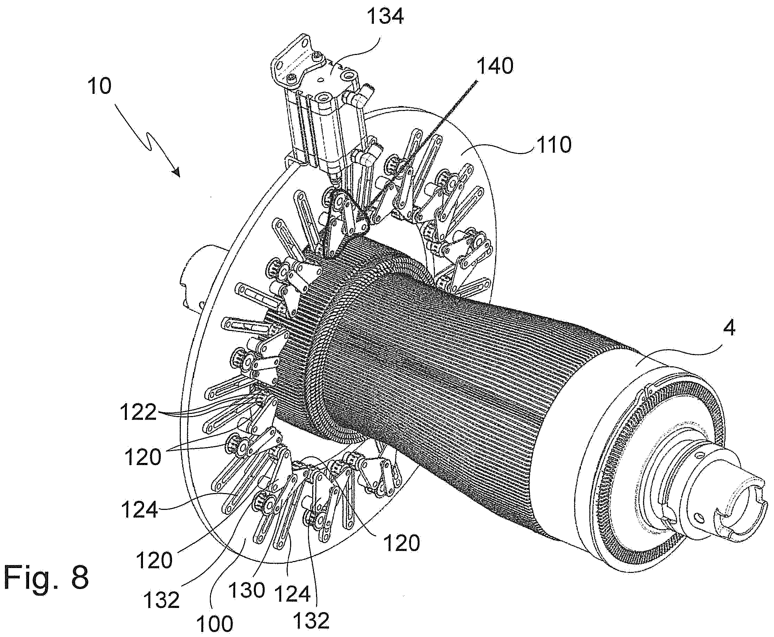

Figur 8 zeigt eine Anordnung 10 mit einer Einpressvorrichtung 100 zum Einpressen eines Drahtpakets sowie mit einem Paketträger 4. Sowohl die Anordnung 10 wie auch der Paketträger 4 stellen in den gezeigten Ausführungen jeweilige Ausführungsbeispiele der Erfindung dar.

Es sei verstanden, dass in den Figuren 8 bis 19 Ausführungen der Erfindung dargestellt sind, welche grundsätzlich weitgehend unabhängig von den bisherigen Ausführungen beschrieben sind, welche jedoch sowohl vollständig wie auch hinsichtlich einzelner Merkmale mit den bisher beschriebenen Ausführungen beliebig kombiniert werden können.

Die Einpressvorrichtung 100 weist einen Rahmen 110 auf. Der Rahmen 110 ist vorliegend in Form eines Rings ausgebildet. An dem Rahmen 110 sind die weiteren Elemente der Einpressvorrichtung 100 angebracht, welche nachfolgend beschrieben werden.

Die Einpressvorrichtung 100 weist eine Anzahl von Einpresselementen 140 auf. Diese sind vorliegend in Form von Riemen ausgebildet. Die Riemen laufen um jeweils drei Zahnräder 120 um, wovon jeweils zwei radial innenliegend sind und damit eine Anlagefläche des Riemens bzw. des Einpresselements 140 am Paketträger 4 definieren. Jedes Zahnrad 120 weist eine Anzahl von Vorsprüngen 122 auf, welche als Zähne der Zahnräder 120 ausgebildet sind. Diese Zähne kommen mit dem Riemen bzw. dem Einpresselement 140 in Eingriff.

Jeweils ein Zahnrad 120 pro Riemen ist radial außenliegend angeordnet. Es definiert insbesondere einen Weg, entlang welchem der jeweilige Riemen umläuft. Die radial innenliegenden Zahnräder 120 sind wie gezeigt in Zweiergruppen angeordnet. Dabei können jeweils die beiden Zahnräder 120 jeder Zweiergruppe zusammen bewegt werden, wie dies weiter unten näher beschrieben werden wird.

Jedes radial innenliegende Zahnrad 120 ist entlang eines jeweiligen Verschiebewegs 124 verschiebbar. Die Verschiebewege 124 sind linearer und bezüglich einer gemeinsamen Mittenachse, welche auch eine Mittenachse des Rahmens 110 bzw. der Einpressvorrichtung 100 darstellt, radial ausgerichtet. Die Einpresselemente 140 sind somit radial verschiebbar.

Die Einpressvorrichtung 100 weist ferner eine Anzahl von Eindrückelementen 130 auf. Dabei ist jedes Eindrückelement 130 jeweils zwei radial innenliegenden Zahnrädern 120 zugeordnet.

Die Eindrückelemente 130 sind dazu ausgebildet, die jeweils zugeordneten Zahnräder 120 entlang der jeweiligen Verschiebewege 124 zu verschieben. Hierzu weisen die Eindrückelemente 130 jeweilige Anlenkhebel 132 auf, wobei jeder Anlenkhebel 132 mit jeweils einem Zahnrad 120 verbunden ist. Bewegt sich ein Eindrückelement 130 bzw. wird es durch einen nur einmalig am oberen Rand dargestellten externen Mechanismus 134 bewegt, wobei typischerweise für jedes Eindrückelement 130 ein separater Mechanismus vorgesehen ist, so werden auf diese Weise die Zahnräder 120 entlang ihrer jeweiligen Verschiebewege 124 bewegt. Die Mechanismen 134 können insbesondere hydraulisch ausgeführt sein und damit die Eindrückelemente 130betätigen.

Die Einpresselemente 140 dienen insbesondere dazu, ein Drahtpaket in jeweilige Aufnahmen eines Paketträgers 4 einzudrücken und somit dafür zu sorgen, dass das Drahtpaket radial nach innen gedrückt wird. Wie dies genau erfolgen kann wird weiter unten näher beschrieben werden.

Die Anordnung 10 weist des Weiteren den bereits erwähnten Paketträger 4 auf.

Dieser Paketträger 4 wird weiter unten näher beschrieben werden. Er dient insbesondere dazu, ein Drahtpaket zunächst aufzunehmen und dann in geeigneter Weise in ein Bauteil einzuführen. Es sei jedoch verstanden, dass die gezeigte Einpressvorrichtung 100 grundsätzlich auch mit anderen Ausführungen von Paketträgern 4 zusammenwirken kann und es sich bei der dargestellten und beschriebenen Ausführung lediglich um eine bevorzugte Variante handelt.

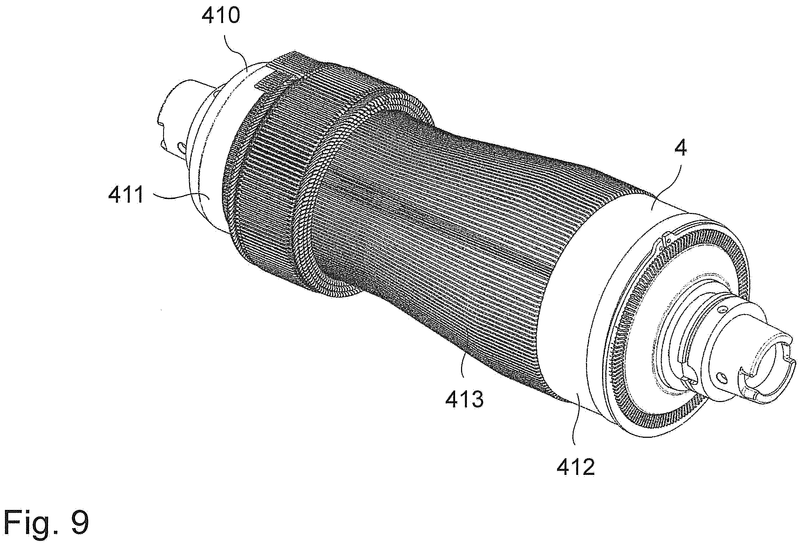

Figur 9 zeigt den Paketträger 4 separat. Dabei ist zu erkennen, dass der Paketträger 4 einen Einpressdorn 410 aufweist, welcher sich entlang einer Längsachse des gesamten Paketträgers 4 erstreckt und bezüglich dieser Längsachse im Wesentlichen radialsymmetrisch ist.

Der Einpressdorn 410 weist einen ersten Bereich 411 und einen zweiten Bereich 412 auf. Wie gezeigt weist dabei der erste Bereich 411 einen kleineren Radius auf als der zweite Bereich 412.

Zwischen den beiden Bereichen 411, 412 ist der Einpressdorn 410 konisch ausgeführt, so dass sich der Radius entlang der bereits erwähnten Längsachse kontinuierlich erweitert. Dies definiert einen konischen Bereich 413 und kann ausgenutzt werden um ein Drahtpaket in ein Bauteil einzubringen, wie weiter unten näher beschrieben werden wird.

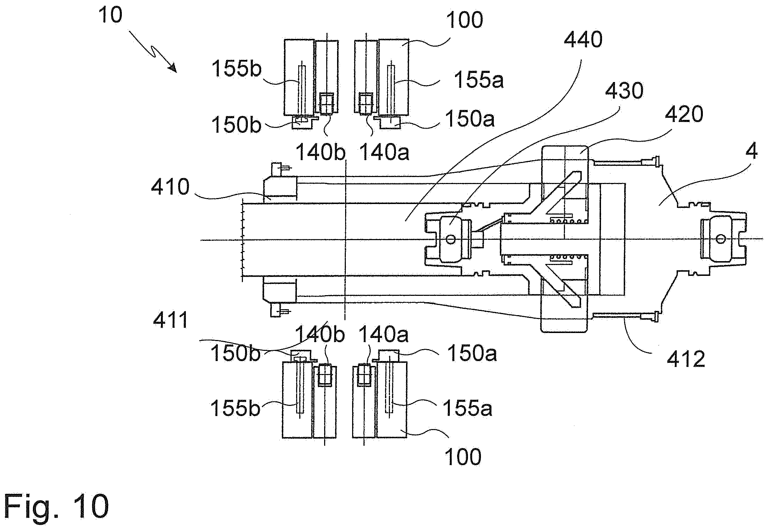

Figur 10 zeigt eine Anordnung 10 mit einer Einpressvorrichtung 100 und einem Paketträger 4, wobei Figur 10 eine schematische Seitenansicht ist und insbesondere die Einpressvorrichtung 100 im Vergleich zur Ausführung von Figur 8 etwas abgewandelt ist. Hierauf wird nachfolgend näher eingegangen werden.

Die Einpressvorrichtung 100 weist, wie bereits mit Bezug auf Figur 8 beschrieben wurde, eine Anzahl von Einpresselementen 140 auf, welche in Form von Riemen ausgebildet sind. Die Einpresselemente 120 sind dabei in zwei Gruppen aufgeteilt, wobei eine erste Gruppe von Einpresselementen 140a an einer rechten Seite der Einpressvorrichtung 100 angeordnet ist und eine zweite Gruppe von Einpresselementen 140b an einer linken Seite der Einpressvorrichtung 100 angeordnet ist. Die Einpresselemente 140 können somit über einen größeren Ausdehnungsbereich einpressend wirken.

Die Einpressvorrichtung 100 weist des Weiteren eine Anzahl von Niederhaltern 150 sowie zugeordnete Komprimierwerkzeuge 155 auf. Auch diese sind in zwei Gruppen aufgeteilt, wobei eine erste Gruppe von Niederhaltern 150a an einer rechten Seite der Einpressvorrichtung 100 angeordnet ist und eine zweite Gruppe von Niederhaltern 150b an einer linken Seite der Einpressvorrichtung 100 angeordnet ist. Entsprechendes gilt für die jeweils zugeordneten Komprimierwerkzeuge 155, welche ebenfalls in eine erste Gruppe von Komprimierwerkzeugen 155a und eine zweite Gruppe von Komprimierwerkzeugen 155b aufgeteilt sind. Mittel der Komprimierwerkzeuge 155 können die jeweiligen Niederhalter 150 radial einwärts geschoben werden, so dass sie eine mit Bezug auf andere Figuren beschriebene Wirkung entfalten können.

In Figur 10 sind auch weitere Details des Paketträgers 4 dargestellt. Diese werden nachfolgend näher beschrieben.

Der Paketträger 4 weist eine Anzahl von Lamellen 420 auf. Diese Lamellen 420 stehen radial nach außen, wie dies auch in Figur 10 zu sehen ist. Dabei sind weitere Lamellen 420 entlang des Umfangs des Paketträgers 4 vorhanden, welche in Figur 10 nicht zu sehen sind, da es sich hierbei um eine reine Schnittansicht handelt.

Zwischen den Lamellen 420 sind entlang des Umfangs des Paketträgers 4 jeweilige Aufnahmen ausgebildet, welche in Figur 10 und den weiteren Figuren nicht zu sehen sind, in welchen jedoch ein Drahtpaket in geeigneter Weise eingebracht werden kann.

Der Paketträger 4 weist des Weiteren eine Betätigungsvorrichtung 430 auf, welche dazu ausgebildet ist, die Lamellen 420 radial ein- und auszufahren. Des Weiteren weist der Paketträger 4 eine Verschiebevorrichtung 440 auf, welche dazu ausgebildet ist, die Lamellen 420 entlang der Längsachse des Paketträgers 4 zu verschieben.

In dem in Figur 10 dargestellten Zustand befindet sich die Einpressvorrichtung 100 benachbart zum ersten Bereich 411 des Einpressdorns 410. Des Weiteren ist die Einpressvorrichtung 100 nicht in Kontakt mit dem Einpressdorn 410, also radial beabstandet. Es wird nachfolgend mit Bezug auf die weiteren Figuren beschrieben werden, wie die Einpressvorrichtung 100 und der Paketträger 4 verwendet werden können, um ein Drahtpaket in ein Bauteil einzubringen, wobei das Drahtpaket vorher in die bereits erwähnten Aufnahmen zwischen den Lamellen 420 gepresst wird. Dies entspricht insbesondere einer möglichen Ausführung eines hier beschriebenen Verfahrens.

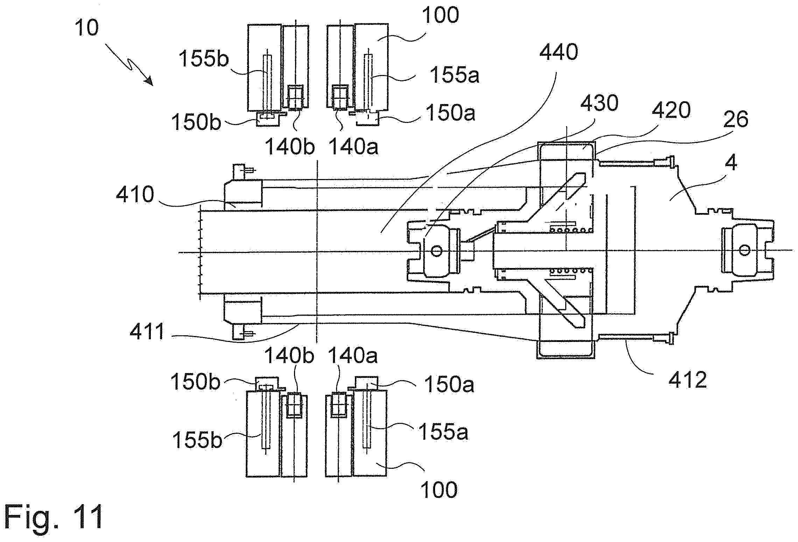

Ausgehend von dem in Figur 10 dargestellten Zustand wird nun zunächst eine Nutisolation 26 in Form eines Isolationspapiers in die Aufnahmen eingebracht, wie dies in Figur 11 zu sehen ist. Damit werden anders ausgedrückt die Lamellen 420 abgedeckt. Durch die Nutisolation 26 ist es in vorteilhafter Weise möglich, für eine elektrische Isolierung zwischen dem Drahtpaket und dem Paketträger 4 zu sorgen, welche auch zusätzlich zu einer bereits vorhandenen Isolierung von Drähten des Drahtpakets sinnvoll sein kann. Beispielsweise kann für den Fall einer Beschädigung einer Isolierung von Drähten des Drahtpakets einem Kurzschluss zwischen einem Draht des Drahtpakets und weiteren Komponenten wie beispielsweise einem Bauteil, insbesondere einem Stator oder Rotor, entgegengewirkt werden. Hierzu kann die Nutisolation 26 auch in jeweilige Nuten eines solchen Bauteils mit übertragen werden. Außerdem kann die Nutisolation 26 Beschädigungen des Drahtpakets während des Herstellungsverfahrens vermeiden.

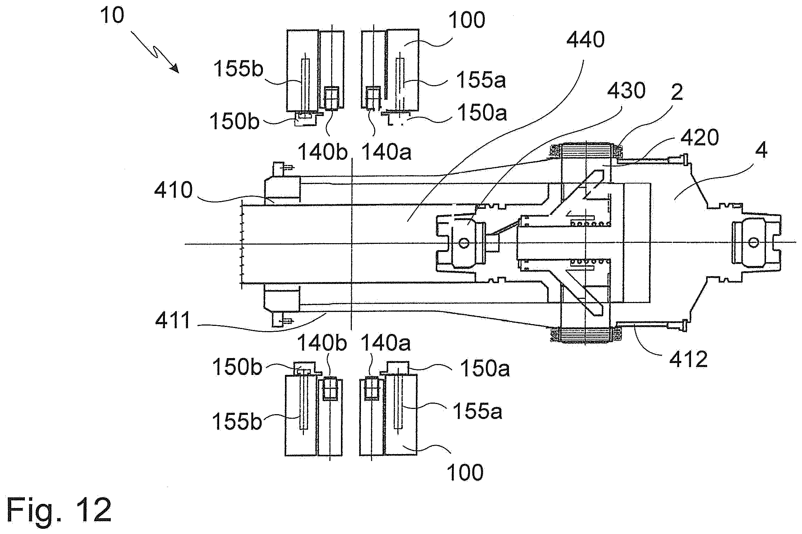

Anschließend wird in die zwischen den Lamellen 420 ausgebildeten Aufnahmen ein Drahtpaket 2 eingebracht. Dies erfolgt durch Aufwickeln des Drahtpakets 2 zwischen den Lamellen 420, wobei sich die Lamellen 420 in einem ausgefahrenen Zustand befinden. Das Ergebnis ist in Figur 12 dargestellt. Das Drahtpaket 2 wurde dabei in einem Zustand aufgebracht, in welchem sich die Lamellen 420 am zweiten Bereich 412 des Einpressdorns 410 befinden, also an dem Bereich mit größerem Durchmesser.

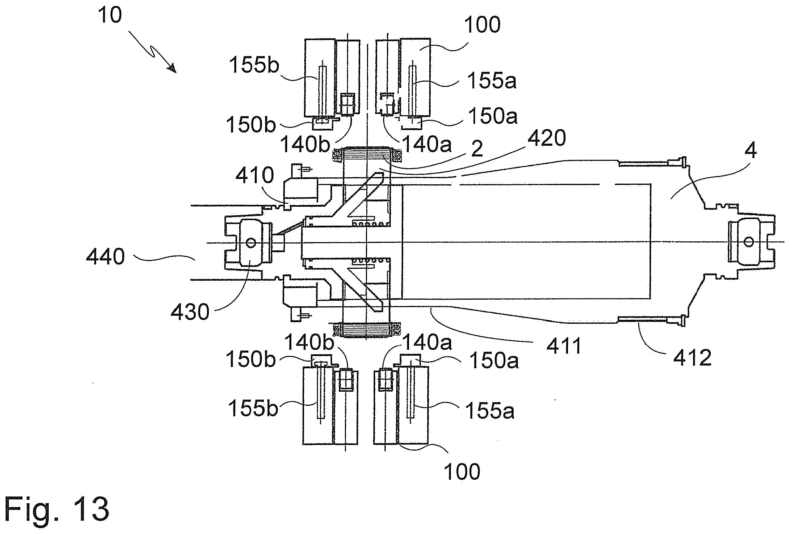

Anschließend werden die Lamellen 420 mitsamt dem aufgenommenen Drahtpaket 2 nach links gefahren, so dass sie sich an dem ersten Bereich 411 befinden. Der daraus resultierende Zustand ist in Figur 13 dargestellt.

Anschließend werden die Einpresselemente 140 der Einpressvorrichtung 100 radial nach innen ausgefahren, so dass diese mit dem Drahtpaket 2 in Kontakt kommen. Die Lamellen 420 werden dabei radial eingefahren.

Dadurch wird das Drahtpaket 2 in die Aufnahmen zwischen den Lamellen 420 eingedrückt und komprimiert. Um eine gleichmäßige Komprimierung zu erreichen, wird der Paketträger 4 bei feststehender Einpressvorrichtung 100 um seine Längsachse gedreht, so dass alle Aufnahmen zwischen den Lamellen 420 sukzessive und wiederholt mit den Einpresselementen 140 in Kontakt kommen. Da die Einpresselemente 140 als Riemen ausgeführt sind, drehen sie sich entsprechend mit. Hierzu werden sie wie mit Bezug auf Figur 8 beschrieben angetrieben. Es hat sich gezeigt, dass durch ein solches Vorgehen eine besonders gute und gleichmäßige Kompression des Drahtpakets 2 in den Aufnahmen zwischen den Lamellen 420 erreicht werden kann.

Nach dem rotierenden Komprimieren werden die Niederhalter 150 ausgefahren, und zwar über ihre jeweiligen Komprimierwerkzeuge 155.

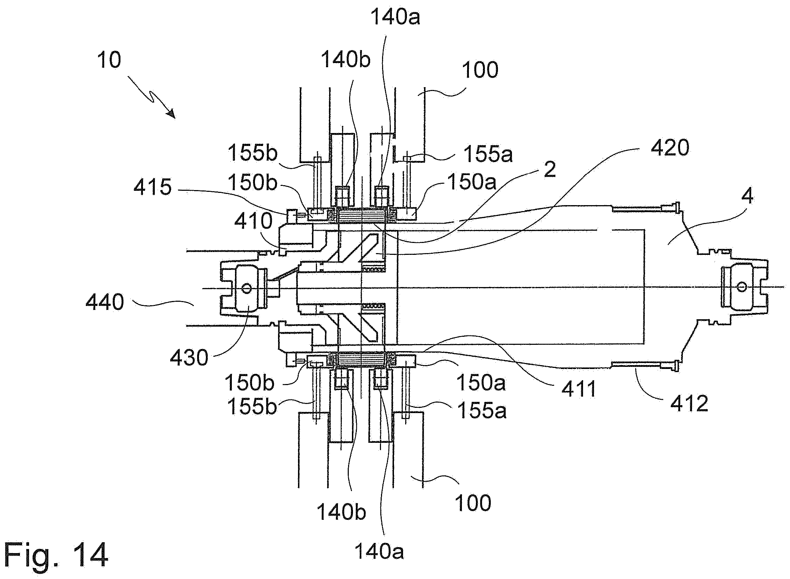

Der daraus resultierende Zustand mit komprimiertem Drahtpaket 2 und anliegenden Einpresselementen 140 sowie anliegenden Niederhaltern 150 ist in Figur 14 dargestellt. Es ist zu erkennen, dass das Drahtpaket 2 dabei - soweit dies in der schematischen Ansicht erkennbar ist - unmittelbar an einer Außenoberfläche des ersten Bereichs 411 des Einpressdorns 410anliegt.

An dem Einpressdorn 410 ist ferner eine Verriegelungsvorrichtung 415 vorgesehen. Damit können die Niederhalter 150b der zweiten Gruppe an dem Einpressdorn 410 verriegelt werden. Anders ausgedrückt werden sie an dem Einpressdorn 410 fixiert, so dass die zugehörigen Komprimierwerkzeuge 155b der zweiten Gruppe radial nach außen zurückgezogen werden können. Ebenso können die Einpresselemente 140 wieder radial zurückgezogen werden.

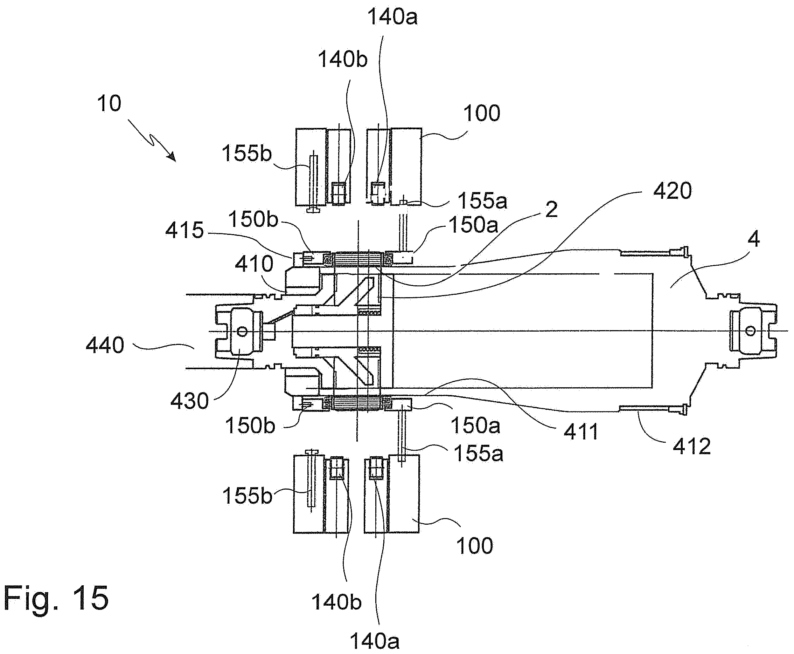

Ein daraus resultierender Zustand ist in Figur 15 dargestellt. Dabei ist insbesondere auch gut zu erkennen, dass der Bereich oberhalb bzw. radial auswärts zum Drahtpaket 2 nunmehr von links her frei zugänglich ist.

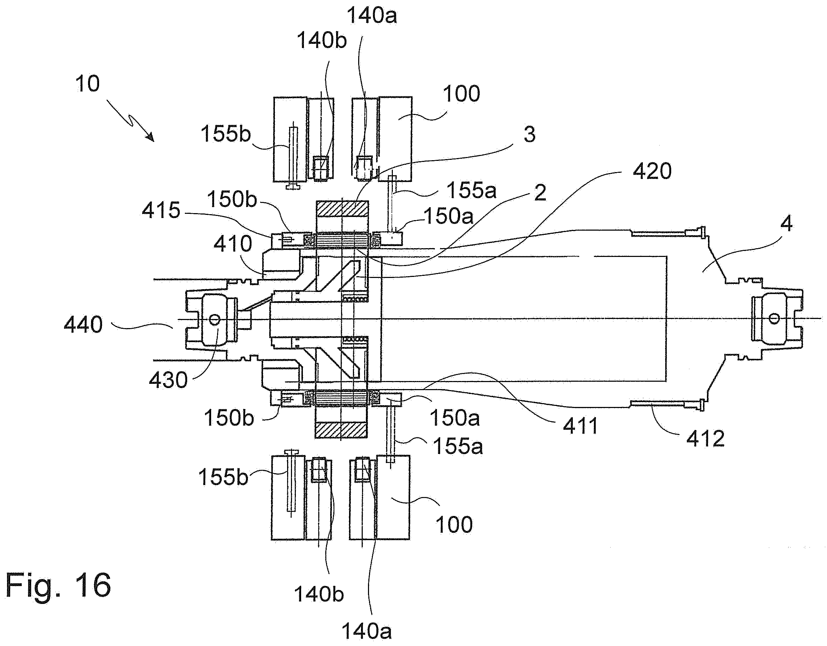

Durch diese freie Zugänglichkeit kann nun ein Bauteil 3 radial außerhalb des Drahtpakets 2 angeordnet werden. Ein daraus resultierender Zustand ist in Figur 16 dargestellt. Das Drahtpaket 2 ist dazu vorgesehen, in nicht näher dargestellte Nuten des Bauteils 3 eingebracht zu werden.

Das Bauteil 3 ist dabei vollständig umlaufend entlang eines Umfangs ausgeführt. Insbesondere kann es sich bei dem Bauteil 3 um einen Stator oder auch um einen Rotor eines Elektromotorshandeln.

Nunmehr werden die Komprimierwerkzeuge 155b der zweiten Gruppe wieder radial nach innen ausgefahren, so dass die Niederhalter 150b der zweiten Gruppe wieder durch die Komprimierwerkzeuge 155b radial nach innen gedrückt werden. Der Verriegelungsmechanismus 415 kann somit wieder gelöst werden.

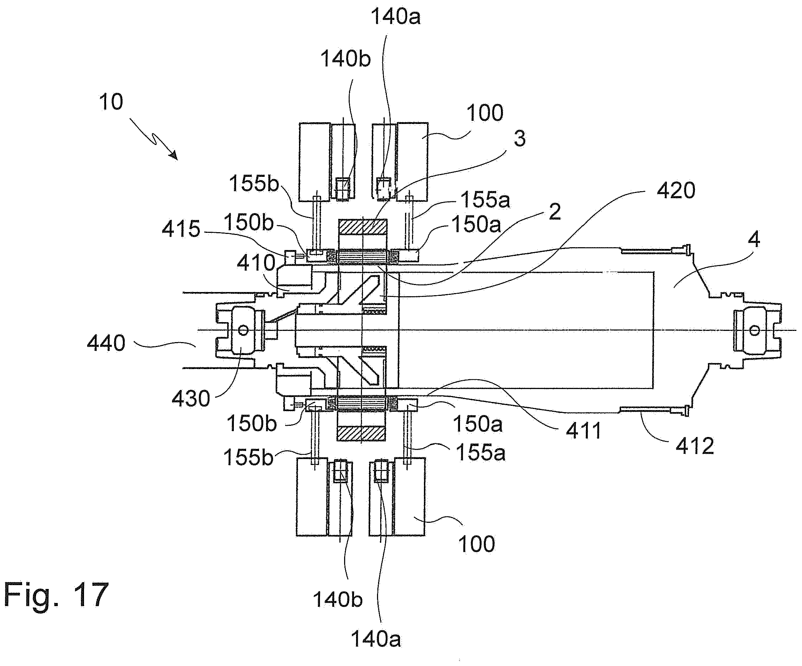

Hierdurch entsteht der in Figur 17 dargestellte Zustand, wobei das Drahtpaket 2 nach wie vor durch die Niederhalter 150 radial innen in den Aufnahmen zwischen den Lamellen 420 gehalten werden.

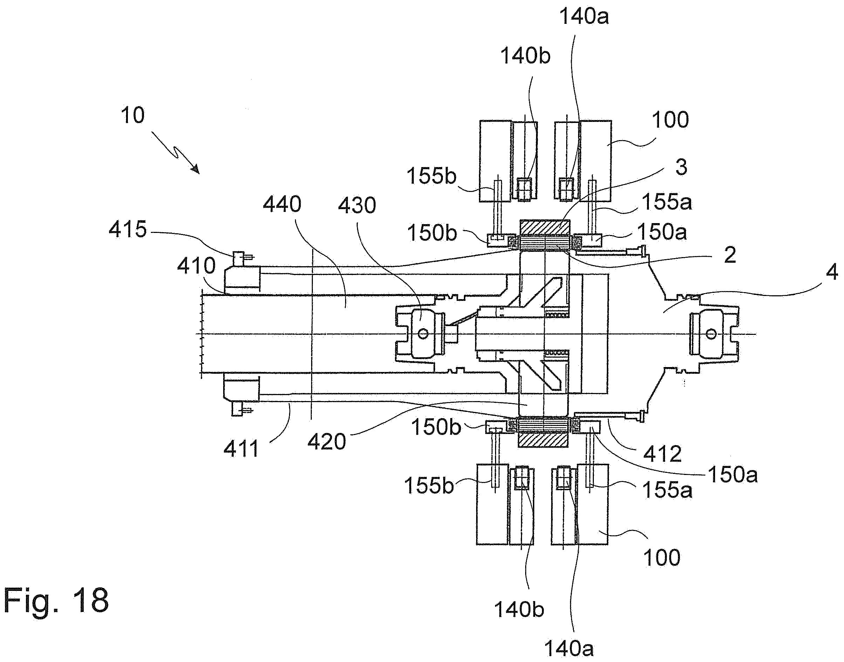

Nunmehr wird der Einpressdorn 410 nach links verschoben. Gleichzeitig wird jedoch das Drahtpaket 2 durch die Niederhalter 150, welche mit der feststehenden Einpressvorrichtung 100 verbunden sind, an einer axialen Bewegung gehindert. Hierdurch kommt das Drahtpaket 2 sukzessive mit Abschnitten des Einpressdorns 410 in Kontakt, welche einen immer höheren bzw. zunehmenden Durchmesser aufweisen. Das Drahtpaket 2 wird auf diese Weise in seinem Durchmesser vergrößert und nach außen gedrückt. Hierdurch wird das Drahtpaket 2 radial in die Nuten des Bauteils 3 eingeführt; die Niederhalter 150 können dabei radial etwas nach außen gedrückt werden, da die zugehörigen Komprimierwerkzeuge 155 einer solchen Bewegung entsprechend nachgeben können. Der daraus resultierende Zustand ist in Figur 18 dargestellt. Es ist zu sehen, dass das Drahtpaket 2 und die Lamellen 420, welche während der nach links gerichteten axialen Bewegung des Einpressdorns 410 ebenfalls in Position gehalten werden, nunmehr an dem Seitenbereich 412 des Einpressdorns 410, also demjenigen Bereich mit größerem Durchmesser, angeordnet sind.

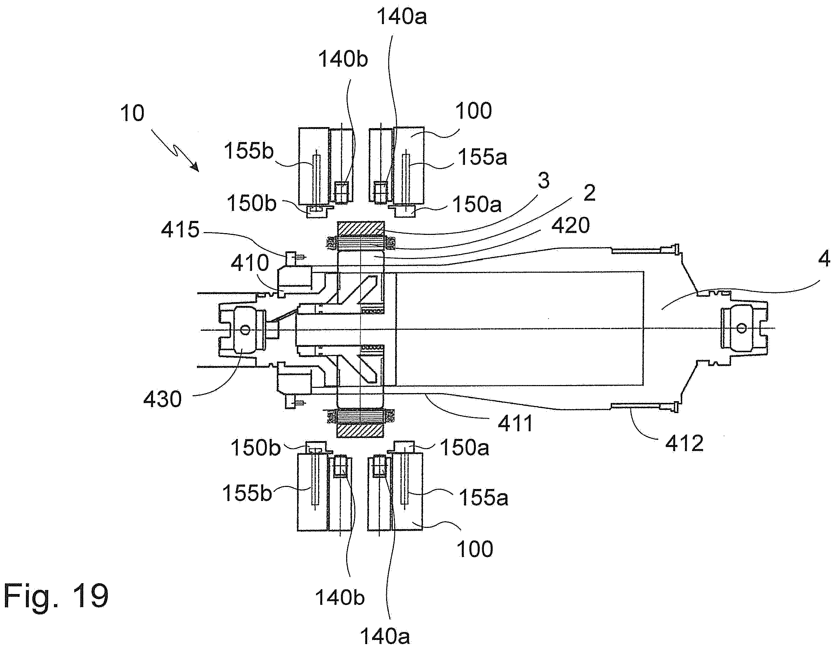

Anschließend wird der Einpressdorn 410 wieder nach rechts gefahren. Das Bauteil 3 mit dem nunmehr eingebrachten Drahtpaket 2 kann somit nach links von dem Paketträger 4 entfernt werden. Dies ist in Figur 19 dargestellt. Damit ist der Vorgang des Einbringens des Drahtpakets 2 in das Bauteil 3 abgeschlossen, so dass das Bauteil 3 verwendet oder weiter verarbeitet werden kann.

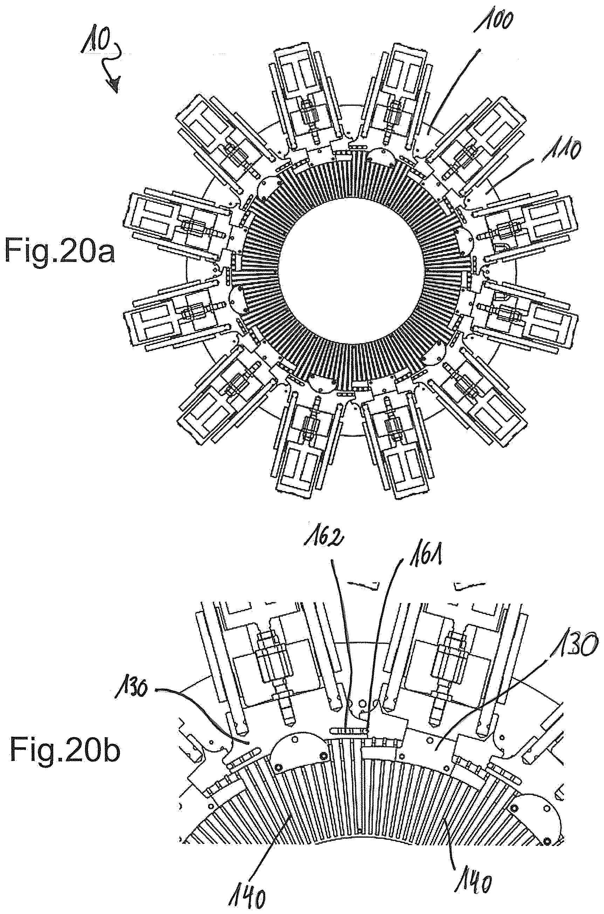

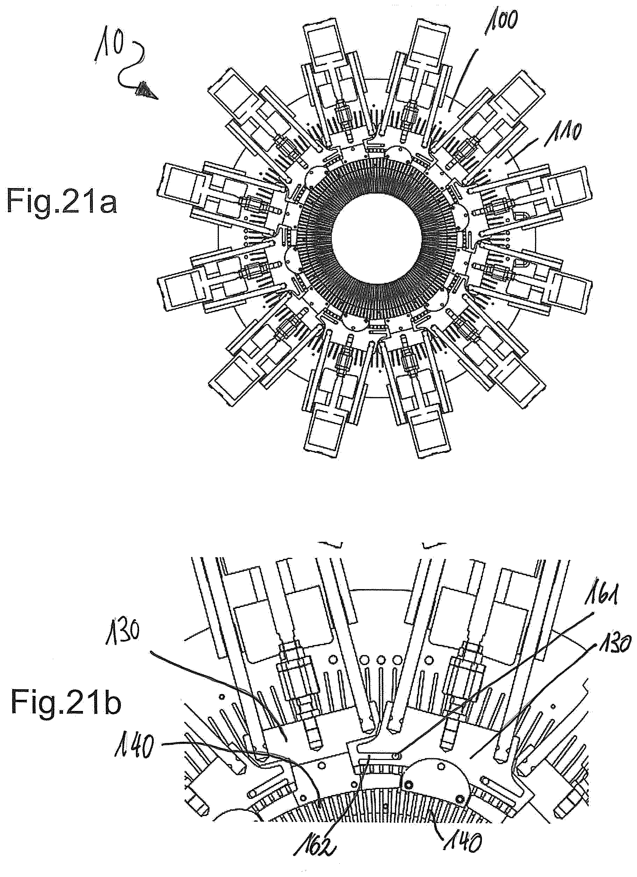

In Figur 20a, 21a ist eine weitere alternative Ausgestaltung der Einpressvorrichtung 100 gezeigt. Der hier gezeigte Aufbau ist grundsätzlich mit dem in Figur 8 gezeigten Aufbau vergleichbar, es wird nur auf die Unterschiede eingegangen. Es ist eine Einpressvorrichtung zum Einpressen eines Drahtpakets 2 in eine Mehrzahl von Aufnahmen eines Paketträgers 4 gezeigt, wobei die Einpressvorrichtung 100 folgendes aufweist:
- einen ringartigen Rahmen 110, welcher um den Paketträger 4 herum positionierbar ist,
- eine Anzahl von Eindrückelementen 130, die jeweils eine Mehrzahl von schieberartigen Einpresselementen 140 tragen und derart ausgebildet ist, um die jeweiligen Einpresselement 140 radial in Richtung auf den Paketträger 4 zu bewegen, so dass das Einpresselement 140 zumindest einen Teil des Drahtpaketes 2 in die jeweilige Aufnahme einpresst.

Es ist hier vorgesehen, dass das einem Einpresselement 140 jeweils einen Teil des Drahtpaketes 2 für eine Nut in diese einschiebt. Es ist aber auch möglich, dass das Einpresselement 140 Teile des Drahtpaketes für mehrere Nuten gleichzeitig bedient.

Das Einschieben der Drahtwicklung in die jeweiligen Nuten erfolgt durch eine radiale Bewegung bzw. Verengung des Radiuses der Eindrückelemente 130. In dem hier gezeigten Ausführungsbeispiel ist es günstig, dass sich der Paketträger 4 nicht relativ um Rahmen 110 zu bewegen braucht, da die Anzahl der schieberartigen Einpresselement 140 der Anzahl der Nuten, die mit Drahtabschnitten der Drahtwicklung zu füllen sind, entspricht, und so alle Nuten erreicht werden.

Bevorzugt ist vorgesehen, dass die radiale Verengungsbewegung (die zu einem Einschieben der Drähte in die Nuten führt) der einzelnen Eindrückelemente 130 zueinander synchron erfolgt. Um dies zu erreichen, ist vorteilhafterweise vorgesehen, dass ein erstes Eindrückelement 130 mit einem Stift 161 ausgestattet ist und der Stift 161 in ein Langloch 162 des am Rahmen benachbart angeordneten zweiten Eindrückelement (130) einsteht. Geschickterweise ist das Langloch 162, bezogen auf den zylindrischen Bereich des Paketträgers 4, dabei in Umfangsrichtung, tangential oder in Richtung einer Passante orientiert, und bewirkt, das bei ein voreilendes Eindrückelement 130 durch die Verkettung mit dem benachbart Eindrückelement 130 entsprechend gebremst wird oder die langsameren entsprechend mitzieht. Daher ist der Antriebsmechanismus 134, zum Beispiel ein pneumatisch betriebener Arbeitszylinder, mit geringerer Genauigkeit auszulegen, bzw. anzusteuern. Zu beachten ist dabei, dass diese synchronisierende Verkettung natürlich auch bei der Variante nach Figur 8 realisierbar ist.

## Patentansprüche

1. Paketträger zum Einbringen eines Drahtpakets (2) in ein Bauteil (3) in Form eines Stators oder eines Rotors eines Elektromotors, wobei der Paketträger (4) folgendes aufweist:
einen Einpressdorn (410) zum Einpressen des Drahtpaketes (2) in das Bauteil (3), welcher sich entlang einer Achse erstreckt,
eine Anzahl von Lamellen (420), welche radial verstellbar sind, wobei sie zumindest in einem ausgefahrenen Zustand radial aus dem Einpressdorn (410) vorstehen und zwischen jeweils zwei umfangsmäßig benachbarten Lamellen (420) eine jeweilige Aufnahme für einen Teil des Drahtpakets (2) ausbilden,
eine Betätigungsvorrichtung (430), welche dazu ausgebildet ist, die Lamellen (420) radial ein- und auszufahren, und
eine Verschiebevorrichtung (440), welche dazu ausgebildet ist, die Lamellen (420) entlang der Achse zu verschieben.

2. Paketträger nach Anspruch 1, wobei der Einpressdorn (410) zumindest teilweise bzw. in einem konischen Abschnitt (413) eine konische Form hat, welche sich entlang der Achse aufweitet.

3. Paketträger nach einem der vorhergehenden Ansprüche, wobei der Einpressdorn (410) radialsymmetrisch bezüglich der Achse ausgebildet, ist.

4. Paketträger nach einem der vorhergehenden Ansprüche, wobei die Betätigungsvorrichtung (430) pneumatisch oder hydraulisch ausgeführt ist.

5. Paketträger nach einem der vorhergehenden Ansprüche, wobei die Betätigungsvorrichtung (430) einen Kolben mit Außen- und Innenkonus zum Ausschieben der Lamellen (420) aufweist.

6. Paketträger nach einem der vorhergehenden Ansprüche, wobei der Paketträger (4) einen Verriegelungsmechanismus zum lösbaren oder temporären Verriegeln von Niederhaltern (150) einer Einpressvorrichtung (100) zum Einpressen eines Drahtpakets (2) aufweist.

7. Paketträger nach einem der vorhergehenden Ansprüche, wobei der Paketträger (4) zum Zusammenwirken mit einer Einpressvorrichtung (100) ausgebildet ist.

8. Anordnung (10) umfassend einen Paketträger (4) nach einem der voranstehenden Ansprüche und eine Einpressvorrichtung (100) zum Einpressen eines Drahtpakets (2) in eine Mehrzahl von Aufnahmen eines Paketträgers (4), wobei die Einpressvorrichtung (100) einen Rahmen (110), welcher um den Paketträger (4) herum positionierbar ist, aufweist und ferner:
a) eine Anzahl von Einpresselementen (140), wobei jedes Einpresselement (140) entlang eines jeweiligen Umlaufwegs bewegbar ist, und wobei jedes Einpresselement (140) radial verschiebbar am Rahmen (110) befestigt ist, und eine Anzahl von Eindrückelementen (130), wobei jedem Einpresselement (140) ein Eindrückelement (130) zugeordnet ist, welches dazu ausgebildet ist, das jeweilige Einpresselement (140) radial in Richtung auf den Paketträger (4) zu bewegen, so dass das Einpresselement das Drahtpaket (2) weiter in die jeweilige Aufnahme einpresst,
aufweist oder
b) eine Anzahl von Eindrückelementen (130), die jeweils eine Mehrzahl von Einpresselementen (140) tragen und derart ausgebildet sind, um die jeweiligen Einpresselemente (140) radial in Richtung auf den Paketträger (4) zu bewegen, so dass das Einpresselement zumindest einen Teil des Drahtpaketes (2) in die jeweilige Aufnahme einpresst,
aufweist.

9. Verfahren für den Einbau eines, aus einer Mehrzahl von Drahtwicklungen (20) bestehenden Drahtpaketes (2) in ein Bauteil (3) in Form eines Stators (30) oder eines Rotors eines Elektromotors, wobei das Bauteil (3) eine Vielzahl von längsverlaufenden Nuten (31) aufweist, die zur Aufnahme von Drahtabschnitten (21) der Drahtwicklungen (20) vorgesehen sind, wobei das Drahtpaket (2) von einem Paketträger (4) nach einem der Ansprüche 1 bis 7 gehalten wird, der Paketträger (4) mit dem Drahtpaket (2) am oder im Bauteil (3) positioniert wird, und zumindest ein Teil (42) des Paketträgers (4) oder mindestens ein gegen den Paketträger (4) angestelltes Element (5, 50, 51) derart bewegt wird, dass zumindest ein Teil des Drahtpaketes (2) in einer, bezogen auf eine Bauteilachse (32) radialen Bewegung (22) in mindestens eine Nut (31) des Bauteils (3) bewegt wird.

10. Vorrichtung für den Einbau eines, aus einer Mehrzahl von Drahtwicklungen (20) bestehenden Drahtpaketes (2) in ein Bauteil (3) in Form eines Stators (30) oder Rotors eines Elektromotors, wobei die Vorrichtung (1) einen Paketträger (4) nach einem der Ansprüche 1 bis 7 aufweist, der dazu vorgesehen ist, das Drahtpaket (2) aufzunehmen und ein Teil (42) des Paketträgers (4) oder mindestens ein gegen den Paketträger (4) anstellbares Element (5) eine Bewegung zumindest eines Teils des Drahtpakets (2) bewirkt.

## Claims

1. Package support for installing a wire package (2) in a component (3) in the form of a stator or rotor of an electric motor, the package support (4) comprising the following:
a press-in mandrel (410) for pressing a wire package (2) into the component (3), which press-in mandrel extends along an axis,
a number of blades (420), which are radially adjustable, the blades protruding radially from the press-in mandrel (410) at least in an extended state and defining a respective seat for a part of the wire package between two circumferentially adjacent blades (420), respectively,
an actuating device (430) designed to radially extend and retract the blades (420), and
a displacing device (440) designed to displace the blades (420) along the axis.

2. Package support according to claim 1, wherein the press-in mandrel (410) has a conical shape at least in part or in a conical section (413), which conical shape expands along the axis.

3. Package support according to any of the preceding claims, wherein the press-in mandrel (410) is designed radially symmetrically with respect to the axis.

4. Package support according to any of the preceding claims, wherein the actuating device (430) is of pneumatic or hydraulic design.

5. Package support according to any of the preceding claims, wherein the actuating device (430) includes a piston with an outer or inner cone for extending the blades (420).

6. Package support according to any of the preceding claims, wherein the package support (4) includes a locking mechanism for releasably or temporarily locking hold-down devices (150) of a press-in device (100) for pressing-in a wire package (2).

7. Package support according to any of the preceding claims, wherein the package support (4) is designed to co-act with a press-in device (100).

8. Arrangement (10), comprising a package support (4) according to any of the preceding claims and a press-in device (100) for pressing a wire package (2) into a plurality of seats of a package support (4), wherein the press-in device (100) comprises a frame (110) that can be positioned around the package support (4) and further comprises:
a) a number of press-in elements (140), each press-in element (140) being movable along a respective circulation path and each press-in element (140) being fixed to the frame (110) in a radially displaceable manner, and a number of push-in elements (130), each press-in element (140) being assigned a push-in element (130) that is designed to move the respective press-in element (140) radially towards the package support so that the press-in element presses the wire package further into the respective seat, or
b) a number of push-in elements (130) each of which carries a plurality of press-in elements (140) and is designed to move the respective press-in elements (140) radially towards the package support (4) so that the press-in element presses at least a part of the wire package (2) into the respective seat.

9. Method for installing a wire package (2) consisting of a plurality of wire windings (20) into a component (3) in the form of a stator (30) or rotor of an electric motor, wherein the component (3) includes a plurality of longitudinal grooves (31) provided to receive wire sections (21) of the wire windings (20), wherein the wire package (2) is supported by a package support (4) according to any of claims 1 to 7, wherein the package support (4) with the wire package (2) is positioned at or in the component (3) and wherein at least a part (42) of the package (2) or at least an element (5, 50, 51) set against the package support (4) is moved in such a way that at least a part of the wire package (2) is moved in at least one groove (31) of the component (3) in a radial direction relative to a component axis (32).

10. Device for installing a wire package (2) consisting of a plurality of wire windings (20) into a component (3) in the form of a stator (30) or rotor of an electric motor, the device (1) comprising a package support (4) according to any of claims 1 to 7, which package support (4) is provided to receive the wire package (2), and wherein a part (42) of the package support (4) or at least an element (5) that can be set against the package support (4) causes a movement of at least a part of the wire package (2).

## Revendications

1. Support de paquet pour l'encastrement d'un paquet de fils (2) dans un composant (3) sous la forme d'un stator ou d'un rotor d'un moteur électrique, le support de paquet (4) comprenant les éléments suivants:
un mandrin d'emmanchement (410) pour emmancher le paquet de fils (2) dans le composant (3), lequel mandrin d'emmanchement s'étend le long d'un axe, un certain nombre de lames (420), qui sont réglables radialement, les lames faisant saillie radialement depuis le mandrin d'emmanchement (410) au moins dans un état étendu et définissant un logement respectif pour une partie du paquet de fils entre deux lames (420) adjacentes de manière circonférentielle, respectivement,
un dispositif d'actionnement (430) conçu pour étendre et rétracter radialement les lames (420), et
un dispositif de déplacement (440) conçu pour déplacer les lames (420) le long de l'axe.

2. Support de paquet selon la revendication 1, dans lequel le mandrin d'emmanchement (410) présente une forme conique au moins en partie ou dans une section conique (413), laquelle forme conique s'étend le long de l'axe.

3. Support de paquet selon l'une quelconque des revendications précédentes, dans lequel le mandrin d'emmanchement (410) est conçu de manière radialement symétrique par rapport à l'axe.

4. Support de paquet selon l'une quelconque des revendications précédentes, dans lequel le dispositif d'actionnement (430) est réalisé pneumatiquement ou hydrauliquement.

5. Support de paquet selon l'une quelconque des revendications précédentes, dans lequel le dispositif d'actionnement (430) comprend un piston avec un cône extérieur ou intérieur pour étendre les lames (420).

6. Support de paquet selon l'une quelconque des revendications précédentes, dans lequel le support de paquet (4) comprend un mécanisme de verrouillage pour verrouiller de manière amovible ou temporaire des abaisseurs (150) d'un dispositif d'emmanchement (100) pour emmancher un paquet de fils (2).

7. Support de paquet selon l'une quelconque des revendications précédentes, dans lequel le support de paquet (4) est conçu pour coopérer avec un dispositif d'emmanchement (100).

8. Agencement (10), comprenant un support de paquet (4) selon l'une quelconque des revendications précédentes et un dispositif d'emmanchement (100) pour emmancher un paquet de fils (2) dans une pluralité de logements d'un support de paquet (4), dans lequel le dispositif d'emmanchement (100) comprend un cadre (110) qui peut être positionné autour du support de paquet (4) et comprend en outre:
a) un certain nombre d'éléments d'emmanchement (140), chaque élément d'emmanchement (140) étant mobile le long d'un trajet de circulation respectif et chaque élément d'emmanchement (140) étant fixé au cadre (110) de manière à pouvoir être déplacé radialement, et un certain nombre d'éléments d'insertion par poussée (130), chaque élément d'emmanchement (140) étant associé à un élément d'insertion par poussée (130) qui est conçu pour déplacer l'élément d'emmanchement (140) respectif radialement vers le support de paquet de sorte que l'élément d'emmanchement presse le paquet de fils plus profond dans le logement respectif,
ou
b) un certain nombre d'éléments d'insertion par poussées (130) dont chacun porte une pluralité d'éléments d'emmanchement (140) et est conçu pour déplacer les éléments d'emmanchement respectifs (140) radialement vers le support de paquet (4) de sorte que l'élément d'emmanchement presse au moins une partie du paquet de fils (2) dans le logement respectif.

9. Procédé pour encastrer un paquet de fils (2) constitué d'une pluralité d'enroulements de fils (20) dans un composant (3) sous la forme d'un stator (30) ou d'un rotor d'un moteur électrique, dans lequel le composant (3) comprend une pluralité de rainures longitudinales (31) prévues pour recevoir des sections de fils (21) des enroulements de fils (20), dans lequel le paquet de fils (2) est supporté par un support de paquet (4) selon l'une quelconque des revendications 1 à 7, dans lequel le support de paquet (4) avec le paquet de fils (2) est positionné sur ou dans le composant (3) et dans lequel au moins une partie (42) du paquet (2) ou au moins un élément (5, 50, 51) placé contre le support de paquet (4) est déplacé de telle sorte qu'au moins une partie du paquet de fils (2) est déplacée dans au moins une rainure (31) du composant (3) dans une direction radiale par rapport à un axe de composant (32).

10. Dispositif pour l'encastrement d'un paquet de fils (2) composé d'une pluralité d'enroulements de fils (20) dans un composant (3) sous la forme d'un stator (30) ou d'un rotor d'un moteur électrique, le dispositif (1) comprenant un support de paquet (4) selon l'une des revendications 1 à 7, lequel support de paquet (4) est prévu pour recevoir le paquet de fils (2), et dans lequel une partie (42) du support de paquet (4) ou au moins un élément (5) pouvant être mis en place contre le support de paquet (4) provoque un mouvement d'au moins une partie du paquet de fils (2).
